# FASCICULE DE BREVET EUROPEEN

(11) **EP 2 079 629 B1**
(45) Date de publication et mention de la délivrance du brevet: **15.09.2010**
(21) Numéro de dépôt: 07866402.6
(22) Date de dépôt: 18.10.2007
(51) Int. Cl.: B62D 65/02, F16B 17/00, B62D 25/14, F16B 21/06, F16B 21/07, F16B 21/12

(54) **DISPOSITIF DE FIXATION D'UN PREMIER SOUS-ENSEMBLE SUR UN SECOND SOUS- ENSEMBLE DE VÉHICULE AUTOMOBILE.**
VORRICHTUNG ZUR BEFESTIGUNG EINES ERSTEN TEILSATZES AN EINEM ZWEITEN TEILSATZ EINES KRAFTFAHRZEUGS
DEVICE FOR FIXING A FIRST SUB-SET TO A SECOND SUB-SET OF A MOTOR VEHICLE

(30) Priorité: 18.10.2006 FR 0654349; 24.01.2007 FR 0700490; 06.04.2007 FR 0702560; 24.07.2007 FR 0756711
(43) Date de publication de la demande: 22.07.2009
(73) Titulaire: Faurecia Interieur Industrie, 92000 Nanterre (FR)
(72) Inventeur: BRANCHERIAU, Christian, 95220 Herblay (FR)
(74) Mandataire: Jacobson, Claude
(86) Numéro de dépôt international: PCT/FR2007/001723
(87) Numéro de publication internationale: WO 2008/047007

(56) Documents cités:
- EP-A1- 0 328 759
- WO-A-02/46627
- WO-A-2006/105585
- FR-A- 2 874 582
- FR-A- 2 882 022

## Description

L'invention concerne en général les dispositifs de fixation d'un premier sous-ensemble structurel ou fonctionnel à un second sous-ensemble structurel ou fonctionnel d'un véhicule automobile, et notamment un dispositif de fixation d'une planche de bord sur la caisse d'un véhicule.

Les documents FR 2 874 582 et WO 02/46 627 décrivent un dispositif de fixation d'un premier sous-ensemble structurel ou fonctionnel sur un second sous-ensemble structurel ou fonctionnel de véhicule automobile, le dispositif de fixation comprenant un organe femelle lié au second sous ensemble, un organe mâle lié au premier sous-ensemble et susceptible de s'engager dans l'organe femelle, un organe de blocage mobile par rapport à l'organe femelle et des moyens automatiques pour déplacer l'organe de blocage.

La demande de brevet déposée sous le numéro FR 05 01433 décrit un dispositif de fixation dans lequel l'organe de blocage est une came rotative coopérant avec une portion de l'organe mâle formant suiveur de came.

Ce dispositif présente le défaut de comporter un grand nombre de pièces et d'être particulièrement coûteux.

Dans ce contexte, l'invention vise à proposer un dispositif de fixation d'une planche de bord sur une caisse de véhicule automobile qui soit plus simple et moins coûteux.

A cette fin, l'invention porte sur un dispositif de fixation conforme à la revendication 1.

Le dispositif de fixation peut également comporter les caractéristiques des revendications dépendantes considérées individuellement ou selon toutes les combinaisons techniquement possibles.

Selon un autre aspect, l'invention est relative à un procédé de contrôle du blocage de l'organe mâle dans l'organe femelle pour un dispositif de fixation tel que décrit ci-dessus, le procédé comprenant les étapes suivantes :
- disposer le capteur par rapport au second sous-ensemble structurel ou fonctionnel de manière à ce que ledit capteur présente un champ de détection couvrant une position nominale occupée par le repère quand l'organe de blocage occupe sa position active,
- fixer le premier sous-ensemble structurel ou fonctionnel au second sous-ensemble structurel ou fonctionnel en engageant l'organe mâle dans l'organe femelle ;
- détecter l'apparition du repère dans le champ de détection du capteur.

En outre, le champ de détection du capteur peut couvrir une zone autour de la position nominale fonction des tolérances de montage du premier sous-ensemble structurel ou fonctionnel sur le second sous-ensemble structurel ou fonctionnel.

D'autres caractéristiques et avantages de l'invention ressortiront de la description détaillée qui est donnée ci-dessous, à titre indicatif et nullement limitatif, en référence aux figures annexées, parmi lesquelles :
- la figure 1 est une vue schématique en perspective, montrant une traverse de planche de bord, une partie de caisse de véhicule, et un dispositif de fixation conforme à l'invention, qui réaliser la fixation de cette traverse sur cette partie de caisse ;
- la figure 2 est une vue en perspective éclatée d'un dispositif de fixation conforme à l'invention ;
- la figure 3 est une vue de côté des différents éléments d'un premier sous-ensemble du dispositif de fixation, destinés à être fixés à la caisse, avant assemblage de ces éléments ;
- la figure 4 est une vue de côté montrant le premier sous-ensemble du dispositif de fixation assemblé et fixé à la caisse et un second sous-ensemble du dispositif de fixation, fixé à la traverse de planche de bord, l'organe mâle du second sous-ensemble étant engagé partiellement dans l'organe femelle du second sous-ensemble et l'organe de blocage occupant sa position d'attente ;
- la figure 5 est une vue similaire à celle de la figure 4 montrant l'organe mâle presqu'entièrement engagé dans l'organe femelle, dans la situation où l'organe de blocage vient d'être libéré de sa position d'attente ;
- la figure 6 est une vue similaire à celle de la figure 5, montrant l'organe de blocage en cours de déplacement vers sa position active de blocage de l'organe mâle ;
- la figure 7 est une vue similaire à celle de la figure 6, illustrant la situation dans laquelle le pêne de l'organe de blocage arrive au contact de la boucle de l'organe mâle ;
- la figure 8 est une vue similaire à celle de la figure 7, montrant l'organe de blocage en position active, le pêne étant complément engagé dans la boucle de l'organe mâle ;
- la figure 9 est une vue éclatée en perspective de l'organe de blocage, pour une variante de réalisation de l'invention dans laquelle l'organe de blocage est en deux parties ;
- les figures 10 et 11 sont des vues de côté montrant l'organe de blocage de la figure 9 respectivement en position d'attente et dans une situation où l'organe de blocage vient d'être libéré de sa position d'attente ;
- les figures 12 et 13 sont des vues de côté, agrandie, respectivement du pêne de l'organe de blocage des figures 2 à 8, et d'une variante de réalisation du pêne dans lequel celui-ci coopère avec l'organe mâle par une surface arquée ;
- les figures 14 et 15 sont des représentations graphiques indiquant en ordonnée l'effort fourni par le ressort (trait plein) et l'effort à exercer sur l'organe mâle en vue de rattraper un éventuel jeu de la planche de bord par rapport à la caisse suivant la direction d'engagement (traits mixtes), en fonction de la position de l'organe mâle suivant la direction d'engagement (en abscisse), respectivement pour le pêne de la figure 12 et pour le pêne de la figure 13 ;
- la figure 16 est une vue simplifiée en élévation d'une partie latérale gauche d'un véhicule automobile, dans lequel l'étrier gauche de la traverse de planche de bord est monté sur le châssis par deux dispositifs de fixation conforme à l'invention, deux capteurs de contrôle du blocage des organes mâles des deux dispositifs de fixation dans les organes femelles correspondants étant en outre représentés ;
- la figure 17 est une vue du côté gauche d'un dispositif de fixation de la figure 16 ;
- la figure 18 est une vue en coupe d'une partie avant d'un véhicule automobile dans un plan vertical longitudinal, montrant le dispositif de fixation de la liaison TIB et montrant deux positions possibles pour un capteur de contrôle de blocage de l'organe mâle du dispositif de fixation dans l'organe femelle ;
- la figure 19 est une vue en perspective de l'organe mâle du dispositif de fixation des figures 16 à 18, pour une variante de réalisation dans laquelle le bord de la boule coopérant avec l'organe de blocage est amovible ;
- la figure 20 est une vue en perspective de l'organe de blocage des figures 9 à 13 et de moyens élastiques aptes à solliciter cet organe vers sa position active, pour une variante de réalisation ans laquelle ces moyens comprennent une pluralité de ressorts de compression parallèles ;
- la figure 21 est une vue de face d'un basculeur d'un organe de blocage selon une variante de réalisation de l'invention analogue à celle des figures 9 à 11;
- les figures 22 à 24 sont des vues de face montrant le basculeur de la figure 21 dans différentes configurations successives lors de la libération de l'organe de blocage de sa position d'attente,
- la figure 25 et une vue de côté d'un basculeur d'un organe de blocage selon une variante de réalisation de celui de la figure 21 ;
- la figure 26 est une vue en coupe du basculeur de la figure 25, considérée suivant l'incidence des flèches XXVI de la figure 25 ;
- la figure 27A est une vue de côté du basculeur des figures 21 et 22, quand l'organe de blocage est en position d'attente, les pions étant en appui sur les crans de blocage ménagés dans les rainures ;
- la figure 27B est une vue similaire à celle de la figure 27A, dans la situation où le basculeur a pivoté sous l'effet de l'engagement de l'organe mâle dans l'organe femelle, mais,où les pions ne sont pas encore désolidarisés du corps du basculeur ;
- la figure 27C est une vue similaire à celle des figures 27A et 27B, illustrant la situation où les pions se sont désolidarisés du corps du basculeur et ont pivoté par rapport au cran de blocage ;
- la figure 28 est une vue de face de l'organe femelle d'un dispositif de fixation conforme à une variante de réalisation de l'invention, dans laquelle l'élément femelle comporte des languettes anti retour aptes à bloquer l'organe mâle en translation en sens inverse de la direction d'engagement un fois que cet organe mâle est partiellement engagé à l'intérieur de l'organe femelle ; et
- la figure 29 est une vue en coupe de l'organe femelle de la figure 28 et d'un organe mâle partiellement engagé dans ledit organe femelle.

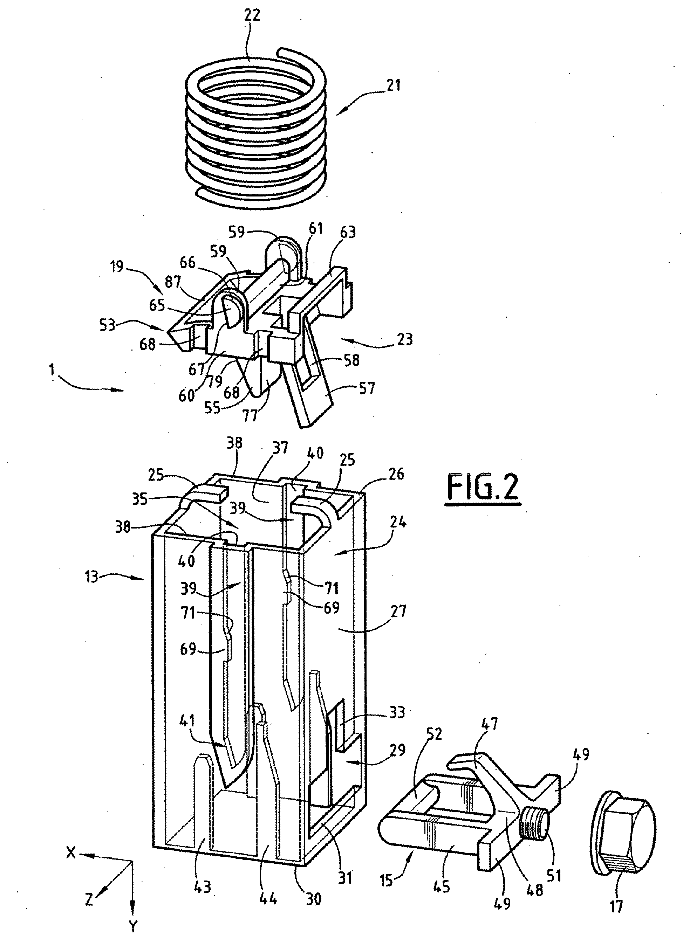

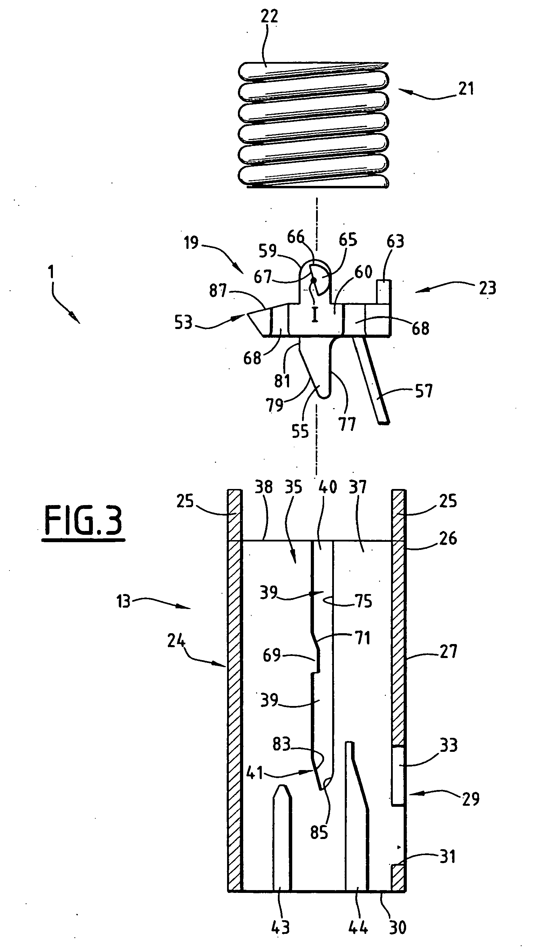

Le dispositif illustré notamment sur les figures 2 et 3 est prévu pour assurer la fixation d'un premier sous-ensemble structurel ou fonctionnel du véhicule sur un second sous-ensemble structurel ou fonctionnel du véhicule. Ainsi, il est par exemple, mais pas exclusivement, adapté à la fixation de la planche de bord sur la caisse du véhicule ou d'un siège sur la caisse du véhicule.

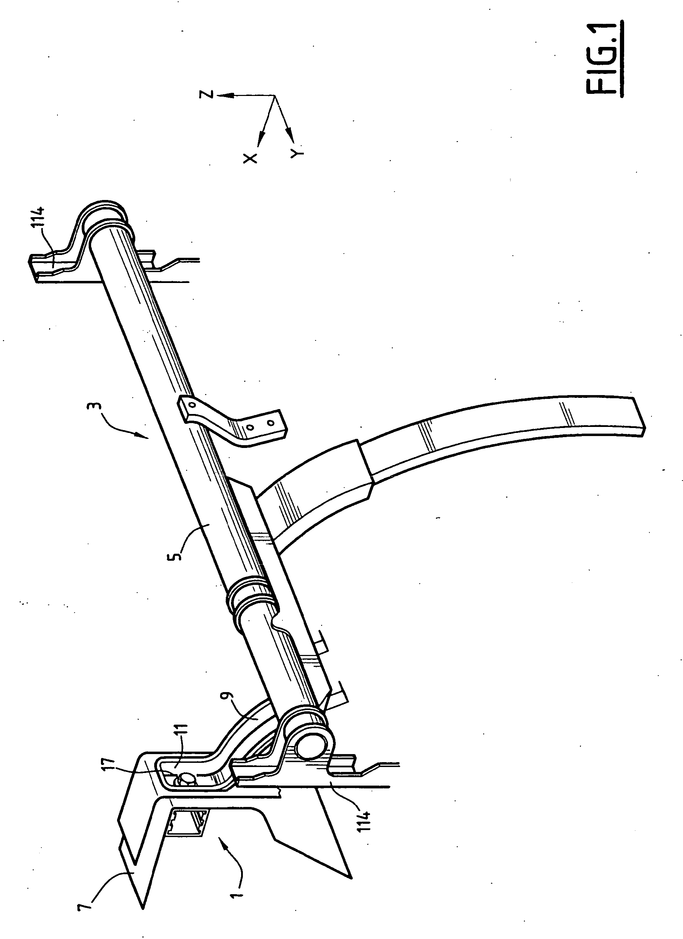

Comme le montre la figure 1, le dispositif de fixation 1 est destiné à fixer rigidement un élément structurel de la planche de bord 3, par exemple la traverse 5 de la planche de bord, à un élément structurel 7 du véhicule.

L'élément structurel du véhicule, que l'on dénommera de façon générique « caisse » ou « partie de caisse » est typiquement une traverse appelée « traverse inférieure de baie » ou « T. I. B. ». La traverse 5 de la planche de bord est munie d'une patte de fixation 9, dite « liaison T.I.B. », qui présente une partie d'appui et de fixation 11 tournée vers la partie de caisse 7, et au niveau de laquelle est réalisée la fixation par le dispositif 1. Un seul dispositif de fixation a été représenté sur la figure 1, étant entendu que la traverse 5 est fixée en plusieurs points répartis sur la longueur de la traverse, de préférence en trois points, au moyen de dispositifs de fixation de préférence identique ou analogue à celui représenté sur les figures 2 à 8.

Sur la figure 1, on a porté un système d'axes X, Y et Z, l'axe X définissant la direction longitudinale du véhicule, c'est-à-dire la direction de déplacement normale du véhicule, l'axe Y s'étendant suivant la direction transversale et l'axe Z définissant la direction verticale. Par ailleurs, la droite, la gauche, l'avant et l'arrière seront entendus dans la description qui va suivre relativement au sens de déplacement normal du véhicule.

Comme le montre la figure 2, le dispositif de fixation 1 comporte :
- un organe femelle 13 prévu pour être fixé à la caisse 7 ;
- un organe mâle 15 susceptible de s'engager dans l'organe femelle 13 suivant une direction d'engagement longitudinale ;
- un écrou 17 de fixation de l'organe mâle 15 sur la liaison T.I.B. 11, usuellement appelé écrou SAV ;
- un organe de blocage 19, mobile par rapport à l'élément femelle 13 entre une position d'attente dans laquelle l'organe de blocage 19 autorise l'engagement de l'organe mâle 15 dans l'organe femelle 13 suivant la direction d'engagement et une position active dans laquelle l'organe de blocage 19 coopère avec l'organe mâle 15 en vue de bloquer cet organe mâle 15 par rapport à l'organe femelle 13 selon la direction d'engagement ;
- des moyens automatiques 21 pour déplacer l'organe de blocage 19 depuis sa position d'attente jusqu'à sa position active, activés par l'engagement de l'organe mâle 15 dans l'organe femelle 13.

Les moyens automatiques 21 de déplacement de l'organe de blocage 19 comprennent un organe élastique 22 sollicitant l'organe de blocage 19 en translation vers sa position active, et des moyens 23 pour bloquer de manière libérable l'organe de blocage 19 en position d'attente.

L'organe élastique 22 est un ressort hélicoïdal travaillant en compression.

L'organe femelle 13 comporte une enveloppe externe 24 tubulaire, d'axe prévu pour être transversal, et de section rectangulaire perpendiculairement à son axe. L'enveloppe 24 est ouverte à ses deux extrémités axiales. Elle porte deux pattes de sertissage 25 à une première extrémité axiale 26. L'enveloppe 24 comporte sur une paroi 27 prévue pour être perpendiculaire à la direction d'engagement, une ouverture 29 de passage de l'organe mâle 15. L'ouverture 29 présente une section en T et est disposé à l'extrémité axiale 30 de l'enveloppe opposée aux pattes 25. L'ouverture 29 comporte un tronçon 31 prévu pour être vertical, et un tronçon 33 s'étendant axialement vers les pattes 25 à partir d'une portion centrale du tronçon 31.

L'enveloppe externe 24 définit intérieurement une cavité 35 de réception de l'organe mâle 15, délimitée par une surface interne 37. Deux rainures en creux 39 axiales sont ménagées sur la surface interne 37, dans deux parois 38 opposées de l'enveloppe 23 contiguëes à la paroi 27. Les rainures 39 s'étendent depuis l'extrémité 26 de l'enveloppe externe portant les pattes 25, sensiblement jusqu'à l'ouverture 29. Chacune des rainures 39 présente une extrémité ouverte 40 à l'extrémité 26 de l'enveloppe, et présente une extrémité fermée 41 à l'opposée.

Chacune des parois 38 porte également deux nervures 43 et 44 parallèles, en saillie sur la surface interne 37. Les nervures 43 et 44 s'étendent axialement, à partir de l'extrémité 30 de l'enveloppe. La nervure 44, la plus proche de la paroi 27 de l'enveloppe, est plus longue que la nervure 43.

L'organe mâle 15 comporte une boucle 45 rectangulaire, un doigt d'actionnement 47 faisant saillie d'un côté de la boucle 45 à partir d'un bord 48 de la boucle, des butées 49 s'étendant dans le prolongement du bord 48 de part et d'autre de la boucle, et une tige filetée 51 apte à coopérer avec l'écrou 17. Le doigt 47 s'étend à partir du bord 48 vers le bord 52 de la boucle parallèle et opposé au bord 48. La tige filetée 51 s'étend dans le plan de la boucle 45, à partir du bord 48, dans la direction opposée au bord 52.

L'organe de blocage 19 comprend :
- un cadre 53 de forme correspondant sensiblement à la section de la cavité interne 35 de l'organe femelle ;
- un pêne 55 en saillie d'un côté du cadre 53, destiné à coopérer avec la boucle 45 de l'organe mâle en vue de bloquer celui-ci par rapport à l'organe femelle ;
- un bras de libération 57, en saillie par rapport au cadre 53 du même côté que le pêne 55, et apte à coopérer avec le doigt 47 de l'organe mâle en vue de libérer l'organe de blocage 19 de sa position d'attente ;
- deux flasques 59 en saillie par rapport au cadre 53 à l'opposé du pêne 55, s'étendant à partir de deux côtés 60 du cadre destiné à être tourné vers les parois 38 de l'organe femelle, les deux flasques 59 étant disposées en vis-à-vis l'un de l'autre ;
- une nervure 61 s'étendant d'une flasque 59 à l'autre, en saillie par rapport au cadre 53 du même côté que les flasques 59 ;
- un pont de matière 63 en saillie à partir du cadre 53 à l'opposé du pêne 55, s'étendant le long d'un bord du cadre destiné à être tourné vers la paroi 27 de l'organe femelle.

Comme le montre la figure 2, le bras 57 comporte une lumière 58 en son centre, mais présente une extrémité libre pleine. Par ailleurs, le cadre 53 est évidé sous le pont de matière 63.

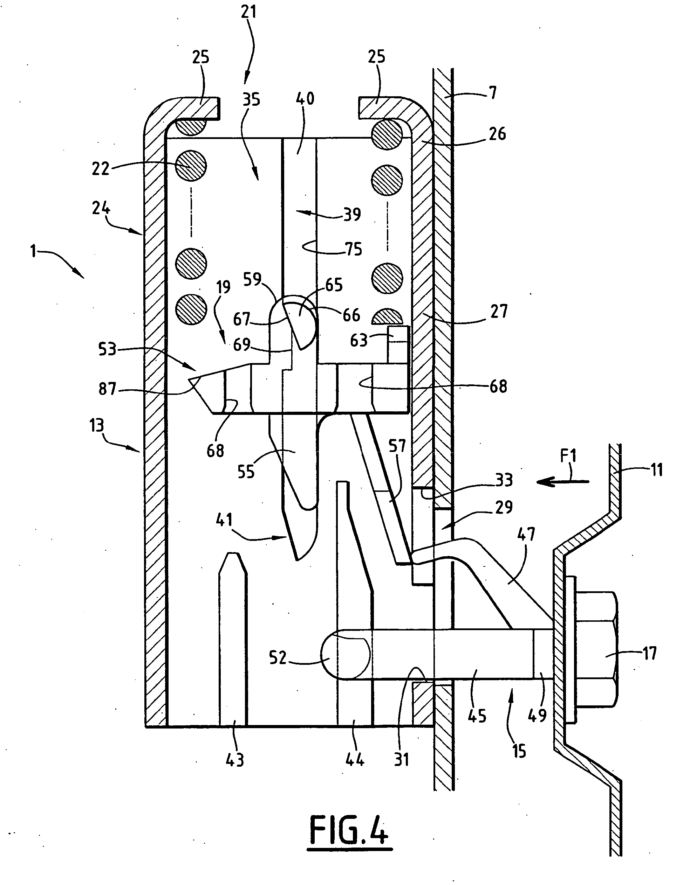

L'organe de blocage 19 comporte deux pions en demi-lune 65 portés par les flasques 59 et faisant saillie vers l'extérieur du cadre 53. Les pions 65 sont destinés à s'engager dans les rainures 39. Chaque pion en demi-lune 65 est délimité latéralement par une base droite 67 et une face en demi-cercle 66 s'étendant d'une extrémité de la base à l'autre. Comme visible sur la figure 4, l'axe central I commun des deux pions en demi-lune 65 s'étend selon l'arête supérieure de la nervure 61. Par ailleurs, deux encoches 68, destinées à coopérer avec les nervures intérieures 43 et 44 de l'organe femelle, sont ménagées dans chacun des côtés 60 du cadre destinés à être tournés vers les parois 38.

Les moyens 23 pour bloquer de manière libérable l'organe de blocage 19 en position d'attente comprennent, dans chacune des rainures 39, un cran 69 en saillie à partir d'un des bords de la rainure vers l'intérieur de celle-ci. Le cran 69 est délimité vers l'extrémité ouverte 40 de la rainure par un pan 71 incliné à environ 25° par rapport à l'axe de l'enveloppe 24.

Le pêne 55 est délimité vers le bras de libération 57 par une face plane 77 sensiblement perpendiculaire au cadre 53.

Le pêne 55 est délimité à l'opposé du bras 57 par une face comprenant, à partir de l'extrémité libre du pêne, une première surface plane oblique 79 inclinée d'environ 24° par rapport à la face 77, puis une seconde surface plane oblique 81 inclinée d'environ 3° par rapport à la face 77.

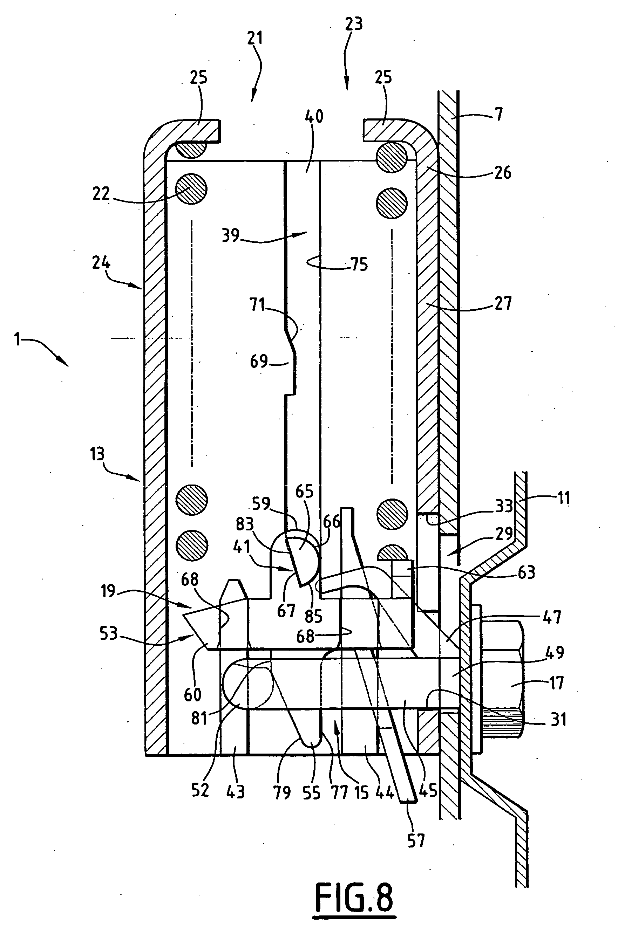

Comme visible sur la figure 8, l'extrémité fermée 41 de chaque rainure est délimitée par un bord incliné 83 et un bord arqué 85 présentant des formes conjuguées de celles des pions en demi-lune.

L'assemblage des différents éléments du dispositif de fixation 1 décrit ci-dessus et le fonctionnement de ce dispositif vont maintenant être détaillés en référence aux figures 4 à 8.

L'organe mâle 15 est d'abord fixé sur la patte de liaison T.I.B. 11 à l'aide de l'écrou SAV 17.

Puis, l'organe femelle 13, l'organe de blocage 19 et le ressort 22 sont assemblés en vue de former un sous-ensemble du dispositif de fixation destiné à être fixé à la caisse du véhicule.

L'organe de blocage 19 est d'abord introduit dans l'enveloppe 24, par l'extrémité ouverte 26 portant les pattes 25. L'organe de blocage est orienté de telle sorte que le pêne 55 et le bras de libération 57 soient tournés vers l'extrémité 30 de l'enveloppe, les flasques 59 pointant vers l'extrémité opposée 26. Les côtés 60 du cadre portant les flasques 59 et les encoches 68 sont tournés vers les parois 38 dans lesquelles sont ménagées les rainures 39. Le pont de matière 63 est disposé le long de la paroi 27 dans laquelle est découpée l'ouverture 29.

L'organe de blocage 19 est introduit dans la cavité 35 selon l'axe de l'enveloppe 24 de manière à engager les pions 65 dans les rainures 39 par les extrémités ouvertes 40 de celles-ci. Puis, l'organe de blocage 19 est déplacé vers l'ouverture 29 jusqu'à ce que les bases 67 des pions viennent porter contre les pans inclinés 71 des crans de blocage.

L'organe 19 occupe alors sa position d'attente, et est maintenu dans cette position d'attente par les pions 65 coopérant avec les crans 69. Dans cette position, le cadre 53 est sensiblement perpendiculaire à l'axe de l'enveloppe 24 et l'inclinaison des bases 67 des pions par rapport audit axe correspond sensiblement à celle des faces 71 des crans. La face 77 du pêne est parallèle à l'axe de l'enveloppe 24 et est tournée vers l'ouverture 29. Les surfaces obliques 79 et 81 sont tournées à l'opposé de l'ouverture 29.

Puis, le ressort hélicoïdal 22 est introduit dans l'enveloppe 24 par l'extrémité ouverte 26 de celle-ci. L'extrémité du ressort 22 tournée vers l'organe de blocage est conformée de telle façon que le ressort 22 porte à la fois sur le pont de matière 63, sur la nervure 61 s'étendant entre les flasques 59, et sur le bord 87 du cadre opposé au pont de matière 63.

Puis, le ressort est comprimé de manière à le rentrer intégralement à l'intérieur de l'enveloppe 24, et les pattes de sertissage 25 sont repliées vers l'intérieur de l'enveloppe 24 de manière à bloquer le ressort hélicoïdal 22 à l'intérieur de l'enveloppe. Comme le montre la figure 4, dans cette position, l'extrémité libre du bras de libération 57 se trouve sensiblement en regard du tronçon 33 de l'ouverture d'introduction de l'organe mâle.

Le sous-ensemble femelle formé par l'organe femelle 13, l'organe de blocage 19 et le ressort 22 est ensuite fixé sur la caisse 7, l'organe femelle 13 étant orienté de telle sorte que l'axe de l'enveloppe s'étende transversalement et que la paroi 27 soit tournée vers l'arrière du véhicule.

La fixation du sous-ensemble sur la caisse 7 a uniquement pour but de positionner et de maintenir le sous-ensemble femelle sur la caisse 7 du véhicule jusqu'à ce que le verrouillage avec l'organe mâle soit réalisé. Une fois le verrouillage effectué, la partie de caisse 7 est pincée entre les organes mâle et femelle du dispositif. Le type de fixation sera préférentiellement une fixation de type clips présentant une possibilité de mouvement relatif de rattrapage de jeu de fabrication et de montage entre le sous-ensemble femelle et la caisse 7 du véhicule dans le plan perpendiculaire à la direction d'engagement.

Pour réaliser la fixation de la planche de bord 3 sur la caisse 7, la planche de bord 3 est approchée de la caisse 7 de manière à placer l'organe mâle 15 en regard de l'ouverture 29. Puis, l'organe mâle est engagé dans l'organe femelle 13 à travers l'ouverture 29, par déplacement de la planche de bord, selon un mouvement longitudinal vers l'avant de direction matérialisée par la flèche F1 de la figure 4.

L'organe mâle est orienté de telle sorte que la boucle 45 soit disposée sensiblement perpendiculairement à la direction transversale. Lors de l'engagement de l'organe mâle 15 dans l'organe femelle 13, la boucle 45 traverse le tronçon 31 de l'ouverture, et le bras d'actionnement 47 traverse le tronçon 33 de l'ouverture. Dans une première partie de la course d'engagement de l'organe mâle 15 dans l'organe femelle 13, la boucle 45 pénètre dans la cavité de l'organe femelle 13, sans que le doigt d'actionnement 47 vienne au contact du bras de libération 57 de l'organe de blocage. Cette situation est illustrée sur la figure 4.

Puis, dans une seconde partie de la course de l'organe mâle, la boucle 45 pénètre plus profondément dans la cavité 35, et le bras d'actionnement 47 vient appuyer sur le bras de libération 57 et le repousser à distance de l'ouverture 29.

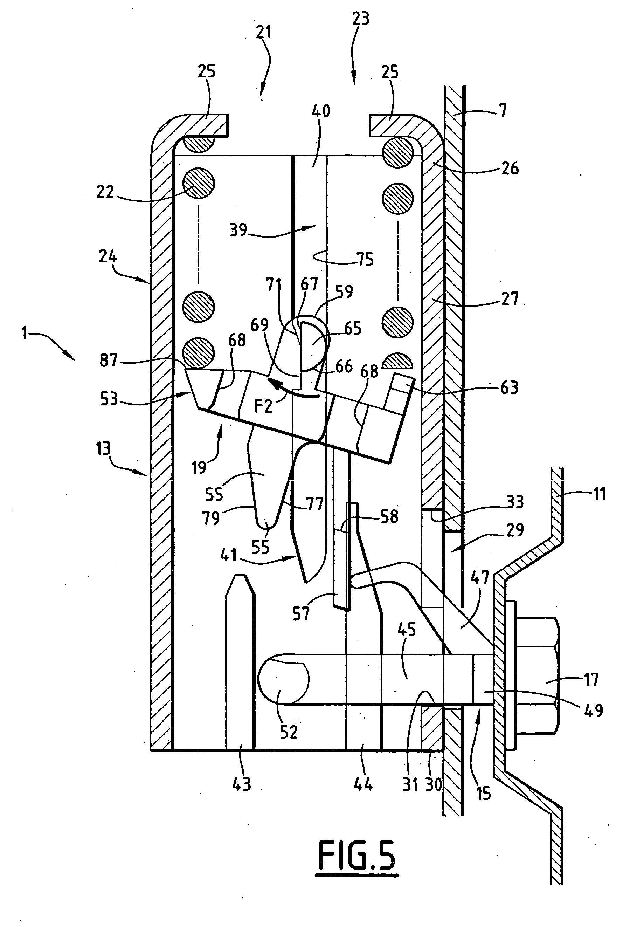

Comme le montrent les figures 4 et 5, en position d'attente de l'organe de blocage 19, les faces semi-circulaires 66 des pions 65 portent contre les bords 75 des rainures 39 opposées au cran 69. La sollicitation appliquée suivant la direction d'engagement par le doigt d'actionnement 47 sur le bras de libération 57 a pour effet de faire rouler les faces en demi-cercle 66 des pions 65 sur les bords 75 des rainures, de telle sorte que l'ensemble de l'organe de blocage 19 subit une rotation d'environ 25° dans le sens horaire sur la figure 5, autour de l'axe I passant par le centre des pions. Cette rotation est matérialisée par la flèche F2 de la figure 5. Cette rotation a pour effet de placer les bases 67 des pions 65 dans un plan parallèle à la direction transversale, la hauteur des crans 69, la largeur des rainures 39 et le rayon des pions 65 étant prévus de telle sorte que les pions 65 puissent glisser entre les crans 69 et les bords 75 des rainures quand les bases 67 de ces pions 65 sont orientées transversalement.

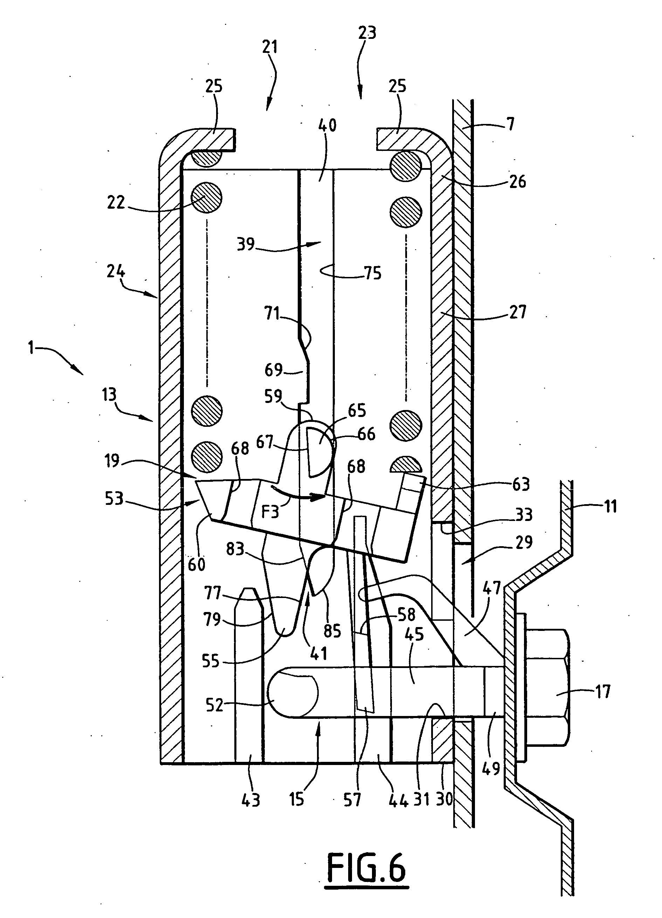

Comme le montre la figure 6, sous l'effet de la poussée du ressort 22, l'organe de blocage 19 se déplace alors vers le bas de la figure 6, c'est-à-dire vers ces extrémités fermées 41 des rainures. Les extrémités des nervures 44 commencent alors à pénétrer dans les encoches 38 correspondantes de l'organe de blocage. Dans cette situation, le doigt d'actionnement 47 de l'organe mâle est situé en regard de la lumière 58 du bras de libération de l'organe de blocage.

Sous l'effet de la poussée du ressort hélicoïdal 22, l'organe de blocage 19 continu à se déplacer vers le bas de la figure 6 et les nervures 44 pénètrent plus profondément dans les encoches 68. Les formes des nervures 44 et celles des encoches 68 sont telles que les nervures 44 glissent sur les parois délimitant les encoches 68, et provoquent le basculement de l'organe de blocage 19 en sens anti-horaire sur la figure 6. Ce basculement est matérialisé par la flèche F3 de la figure 6. Il ramène l'organe de blocage à son orientation initiale, c'est-à-dire avec le cadre 53 perpendiculaire à la direction transversale et les bases 67 des pions en demi-lune inclinés à 25° environ par rapport à la direction transversale.

Ce double mouvement de translation et de basculement n'est pas empêché par le doigt d'actionnement 47, du fait que le bras de libération 57 est évidé et du fait que le cadre 53 de l'organe de blocage est lui aussi évidé sous le pont de matière 63.

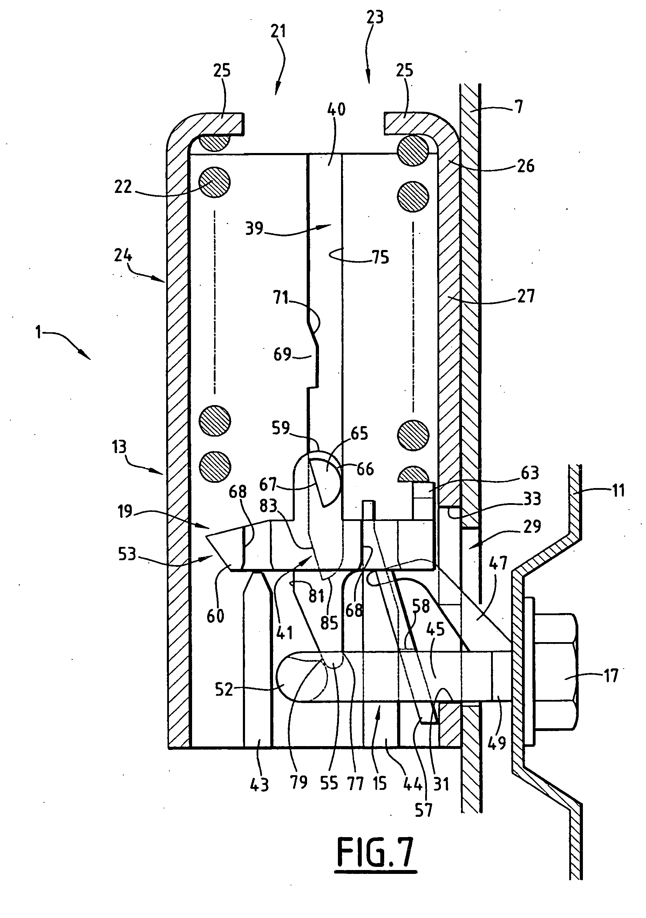

L'organe de blocage 19 arrive alors dans la position illustrée sur la figure 7. L'extrémité libre du pêne 55 pénètre à l'intérieur de la boucle 45 de l'organe mâle et vient porter contre le bord 52 de cette boucle. Le bras de libération 57 est lui aussi engagé à l'intérieur de la boucle 45 mais n'interfère avec aucun des bords de la boucle.

Le pêne 55 vient d'abord au contact du bord 52 de la boucle par la première surface oblique 79.

Sous l'effet de la pression exercée par le ressort hélicoïdal 22, le mouvement de l'organe de blocage 19 se poursuit, de telle sorte que le pêne 55 s'engage profondément à travers la boucle 45 de l'organe mâle, la surface inclinée 79 venant appuyer sur le bord 52 de la boucle et déplaçant en conséquence celui-ci suivant la direction d'engagement au maximum de 4 mm, dans le sens d'un engagement plus profond de l'organe mâle dans l'organe femelle. Avant que l'organe de blocage 19 atteigne les extrémités fermées 41 des rainures, les butées 49 de l'organe mâle viennent porter contre la caisse 7 (figure 8). Simultanément, la seconde surface inclinée 81 vient porter contre le bord 52. L'organe de blocage 19 poursuit son mouvement, mais l'organe mâle ne se déplace pratiquement plus par rapport à l'organe femelle du fait de la très faible inclinaison de la surface 81 par rapport à la direction transversale. La phase pendant laquelle la surface 79 sollicite le bord 52 permet de rattraper un éventuel jeu de la planche de bord par rapport à la caisse, la phase pendant laquelle la surface 81 venant porter contre le bord 52 permettant de réaliser le serrage de la planche de bord contre la caisse. L'organe 19 s'arrête et atteint donc sa position active quand la réaction du bord 52 sur la surface inclinée 81 équilibre la poussée du ressort 22.

Dans cette position, le pêne 55 bloque l'organe mâle 15 à l'intérieur de l'organe femelle 13 selon la direction d'engagement.

Dans cette position, le bras d'actionnement 47 vient se loger dans l'évidement du cadre 53, sous le pont de matière 63.

Il est à noter que, dans la position de la figure 8, il reste normalement un jeu (non représenté) entre les pions en demi-lune 65 et les extrémités 41 afin d'assurer un serrage optimum du système (jeu de fonctionnement de l'ensemble des pièces).

En effet, il ne faudrait pas que les pions demi-lune 65 viennent au contact des extrémités 41 alors que la surface de serrage 81 n'a pas fait son office. Les extrémités fermées 41 ont pour fonction d'éviter que, lors d'une manipulation accidentelle du sous-ensemble femelle, déclenchant l'organe 19 sans présence de la partie mâle, il y ait une expulsion de l'organe 19 en dehors de l'organe femelle 13.

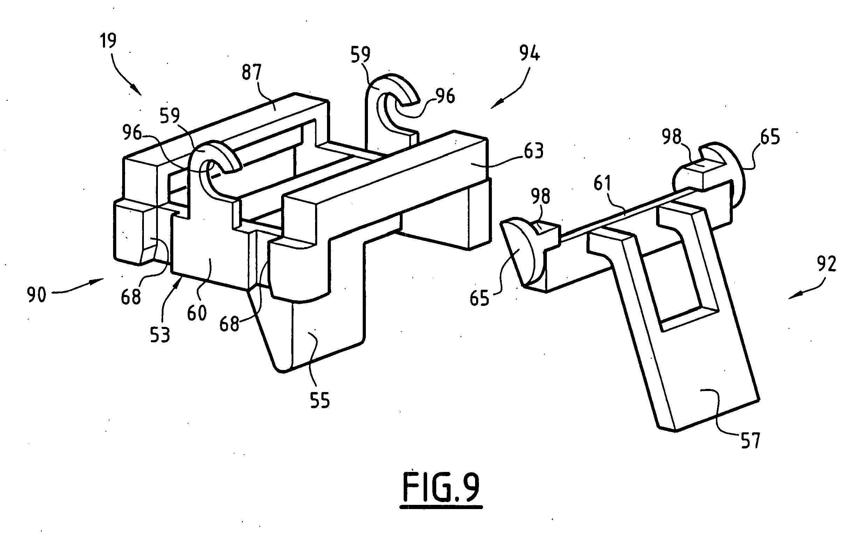

Une variante de réalisation de l'invention, dans laquelle l'organe de blocage 19 n'est pas d'une pièce comme sur les figures 2 à 8 mais est divisé en deux parties, va maintenant être décrite en référence aux figures 9 à 11. Les éléments similaires ou ayant la même fonction seront désignés par les mêmes références que sur le mode de réalisation des figures 2 à 8.

L'organe de blocage 19 comprend un loquet 90, et un basculeur 92 lié au loquet 90 par des moyens de liaison pivot 94. Le loquet 90 comporte un cadre 53, deux flasques 59, et un pont de matière 63, similaires à ceux du mode de réalisation des figures 2 à 8.

Le basculeur 92 comprend un bras de libération 57, une nervure 61 et deux pions en demi-lune 65, similaires à ceux du mode de réalisation des figures 2 à 8. Le bras 57 est rigidement fixé à la nervure 61. Les pions 65 sont solidaires des deux extrémités opposées de la nervure 61.

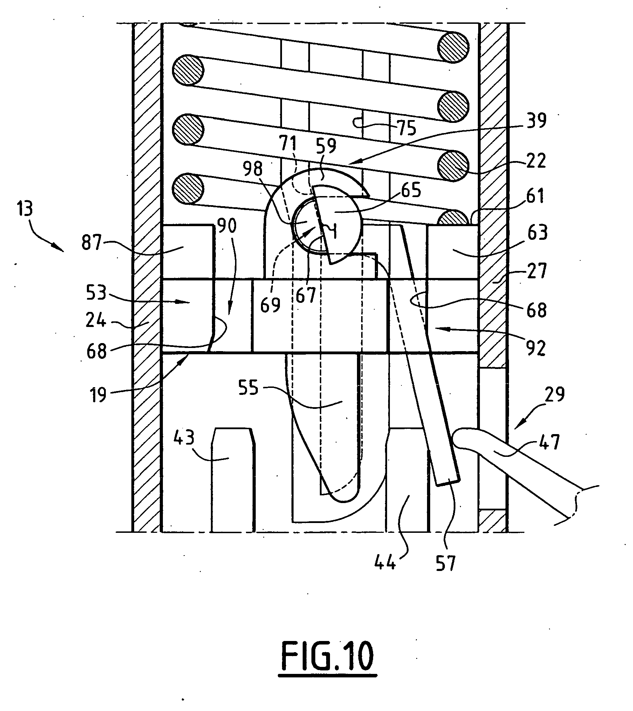

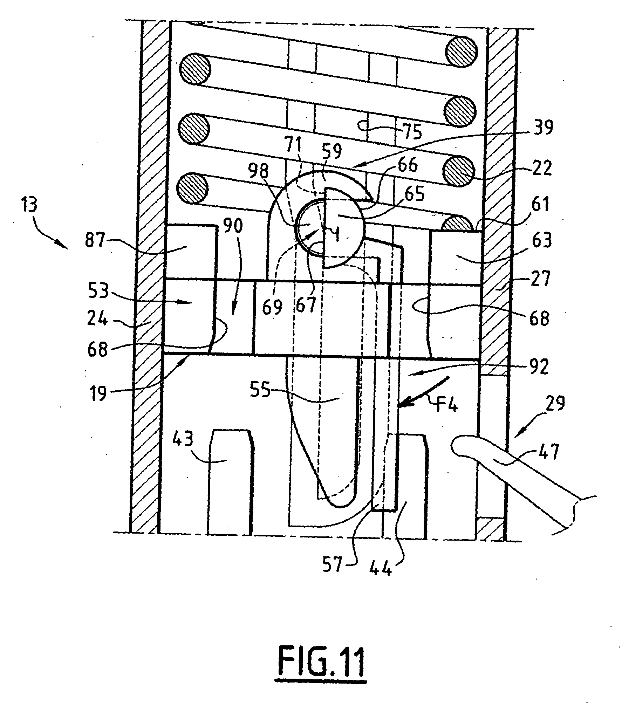

Les moyens de liaison pivot 94 entre le loquet 90 et le basculeur 92 comprennent deux encoches 96 ménagées dans les flasques 59, et deux parties en demi-disques 98 formées sur la nervure 61. Les encoches 96 sont ouvertes seulement vers le pont de matière 63 et sont fermées à l'opposé du cadre 53. Elles forment des paliers de guidage en rotation du basculeur 92. Les parties en demi-disques 98 sont formées immédiatement à côté des pions 65 et constituent les extrémités de la nervure 61. Elles font saillie par rapport à la base droite 67 des pions (figure 10). Les parties 98 sont engagées dans les encoches 96 et sont libres en rotation dans les encoches 96 autour d'un axe I passant par les centres des pions en demi-lune 65 et également par les centres des parties 98, comme le montrent les figures 10 et 11.

Il est à noter que le bord 87 du cadre est conformé en un pont de matière similaire au pont 63, le cadre étant évidé sous ce pont 87.

Par ailleurs, les nervures 43 et 44 ménagées sur les parois 38 de l'organe femelle sont identiques l'une à l'autre, à la différence du mode de réalisation représenté sur les figures 2 à 8.

L'assemblage des différents éléments du dispositif de fixation se fait selon une procédure similaire à celle décrite en référence aux figures 2 à 8. Toutefois, cette procédure comprend une étape supplémentaire consistant à engager les parties en demi-disque 98 du basculeur dans les encoches 96 du loquet. Cette étape supplémentaire est effectuée avant d'introduire l'organe de blocage 19 dans l'organe femelle 13.

Le fonctionnement du dispositif de fixation va maintenant être détaillé en référence aux figures 10 et 11.

Comme le montre la figure 10, en position d'attente de l'organe de blocage 19, les bases 67 des pions portent contre les pans inclinés 71 des crans de blocage. Les faces semi-circulaires 66 des pions portent contre les bords 75 des rainures opposées aux crans 69. Le cadre 53 du loquet est sensiblement perpendiculaire à l'axe de l'enveloppe 24. L'extrémité pleine du bras de libération 57 se trouve en regard du tronçon 33 de l'ouverture d'introduction de l'organe mâle. Le ressort 22 porte à la fois sur les deux ponts de matière 87 et 63 et sollicite l'organe de blocage 19 vers le bas. Celui-ci est bloqué en translation dans les rainures 39, du fait que les bases 67 des pions ne sont pas parallèles à l'axe de l'enveloppe 24.

Quand l'organe mâle 15 a suffisamment pénétré à l'intérieur de l'organe femelle 13, le bras d'actionnement 47 vient appuyer sur le bras de libération 57 du basculeur, et le repousse à distance de l'ouverture 29. La sollicitation appliquée suivant la direction d'engagement par le doigt d'actionnement 47 a pour effet de faire rouler les bords en demi-cercle 66 des pions sur les bords 75 des rainures, de telle sorte que le basculeur 92 subit une rotation d'environ 25° dans le sens horaire de la figure 11 par rapport au loquet 90, autour de l'axe I passant par le centre des pions. Cette rotation est matérialisée par la flèche F4 de la figure 11. Cette rotation a pour effet de placer les bases 67 des pions dans un plan parallèle à la direction transversale, de telle sorte que les pions sont libres de glisser entre les crans 69 et les bords 75 des rainures. Le loquet 90 reste sensiblement perpendiculaire à l'axe de l'enveloppe 24, et ne pivote pas. L'organe de blocage 19 est alors libre de se déplacer vers le bas, sous l'effet de la poussée du ressort 22.

Le fonctionnement du dispositif de fixation est ensuite sensiblement identique à celui décrit plus haut en référence aux figures 2 à 8. Les nervures 43 et 44 s'engagent dans les encoches 68 sans provoquer de basculement du loquet 90. Ce basculement n'est pas nécessaire du fait que le loquet conserve son orientation au moment où l'organe de blocage est libéré de sa position d'attente.

Comme le montre la figure 11, le bras de libération 57 pivote sous l'action du bras d'actionnement 47 jusqu'à se placer parallèlement à la face plane 77 du pêne. Il conserve cette orientation pendant toute la descente de l'organe de blocage 19.

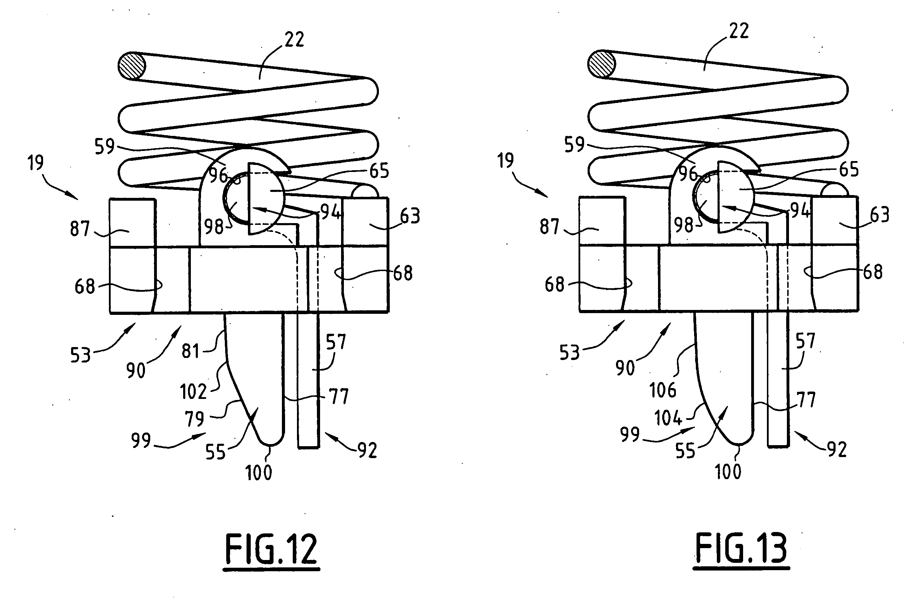

Une seconde variante de réalisation du dispositif de fixation va maintenant être décrite en référence aux figures 12 à 15.

Comme décrit plus haut, dans le mode de réalisation des figures 2 à 8, le pêne 55 est délimité à l'opposé du bras de libération 57 par une face 99 présentant (figure 12) une extrémité libre arrondie 100, puis une première surface plane 79 oblique, inclinée d'environ 24° par rapport à la face 77, puis une seconde surface plane 81 oblique, inclinée d'environ 3° par rapport à la face 77. Ladite face 99 présente par ailleurs entre les surfaces 79 et 81 une zone de transition 102 légèrement arquée. La phase pendant laquelle la surface 79 porte contre le bord 52 de l'organe mâle permet de rattraper un éventuel jeu suivant la direction d'engagement de la planche de bord par rapport à la caisse. La phase pendant laquelle la surface 81 porte contre le bord 52 permet de réaliser le serrage de la planche de bord contre la caisse.

Dans la variante de réalisation illustrée sur la figure 13, la face 99 du pêne présente, à partir de l'extrémité arrondie 100, une surface arquée 104 bombée vers l'extérieur du pêne, puis une surface oblique 106 inclinée d'environ 3° par rapport à la face 77. La surface 104 s'étend, parallèlement à l'axe de l'enveloppe 24, sensiblement sur la même hauteur que les surfaces 79 et 102 de la figure 12. La surface 106 est pratiquement identique à la surface 81. Le pêne 55 s'étend sensiblement sur la même hauteur que sur la figue 12.

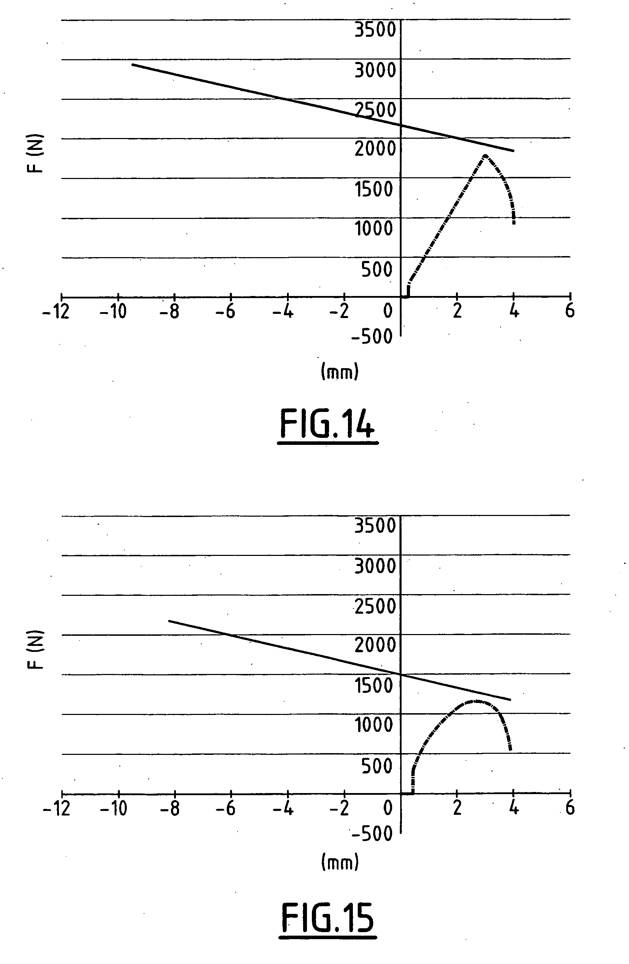

Le profil arqué de la surface 104 permet de diminuer l'effort à fournir par le ressort 22 pour déplacer l'organe mâle pendant la phase de rattrapage de jeu, comme illustré sur les figures 14 et 15.

Sur ces figures, l'abscisse correspond au déplacement de l'organe mâle, exprimé en millimètre, le zéro correspondant au point où se produit le contact entre le pêne 55 et le bord 52 de l'organe mâle. Les courbes sont établies pour un exemple de réalisation dans lequel il existe un jeu de 4 mm suivant la direction d'engagement entre la caisse et la planche de bord. Ceci signifie en pratique que le déplacement suivant la direction d'engagement de la planche de bord est bloqué avant que les butées 49 de l'organe mâle ne viennent en contact avec la partie de caisse 7, un écart de 4 mm subsistant entre les butées 49 et la partie de caisse 7 lorsque le mouvement de la planche de bord est bloqué. Le dispositif de fixation 1 permet de rattraper ce jeu, essentiellement par déformation de la patte 11 sous l'effet de l'effort exercé par le ressort 22 sur l'organe de blocage 19, cet effort étant transmis à l'organe mâle par la surface 79 ou 104 venant en contact avec le bord 52 de l'organe mâle.

Les courbes en traits pleins des figures 14 et 15 représentent les efforts exercés par le ressort 22 sur l'organe de blocage 19. Les courbes en traits interrompus représentent les efforts minimum nécessaires pour déplacer l'organe mâle de 4 mm selon la direction d'engagement, c'est-à-dire pour rattraper le jeu existant entre la caisse et la planche de bord par déformation de la patte 11.

L'effort fourni par le ressort 22 décroît au fur et à mesure que l'organe de blocage 19 se déplace, du fait que le ressort 22 se détend.

On voit sur la figure 14, correspondant à un pêne à profil oblique tel que celui représenté sur la figure 12, que l'effort nécessaire pour déplacer l'organe mâle de 0 mm à 3 mm environ augmente de façon linéaire, de 0 à 1800 Newtons environ. Cette portion de la courbe correspond à la phase pendant laquelle le bord 52 est en contact avec la surface 79. Puis, entre 3 mm et 4 mm, l'effort nécessaire pour déplacer l'organe mâle décroît, d'abord plus lentement, puis plus rapidement. Cette portion de la courbe correspond à la phase pendant laquelle le bord 52 est en contact d'abord avec la surface 102 puis avec la surface 81.

Comme le montre la figure 15, l'effort à fournir pour déplacer l'organe mâle de 0 mm à 3 mm en vue de rattraper le jeu est beaucoup plus faible avec le pêne à profil arqué de la figure 13. L'effort à fournir pour passer de 0 mm à 1 mm est sensiblement égal sur les figures 15 et 14. Pour passer à 2 mm, il est légèrement plus faible sur la courbe de la figure 15 que sur la courbe de la figure 14. Sur la courbe de la figure 15, il plafonne très rapidement au-delà de 2 mm. Ainsi, au maximum, l'effort à fournir est environ de 1100 Newtons pour le pêne de la figure 13. L'effort, au-delà de 3 mm, décroît rapidement, cette partie de la courbe correspondant à la phase où le bord 52 de l'organe mâle est en contact avec l'extrémité de la surface 104 puis avec la surface 106.

Ainsi, le fait que le pêne 55 soit délimité par une surface 104 arquée à l'opposé du bras 57 permet de diminuer l'effort à exercer sur l'organe mâle pour rattraper le jeu entre la caisse et la planche de bord suivant la direction d'engagement, et permet donc d'utiliser un ressort 22 moins puissant. Le ressort 22 sera donc en conséquence moins lourd et moins coûteux.

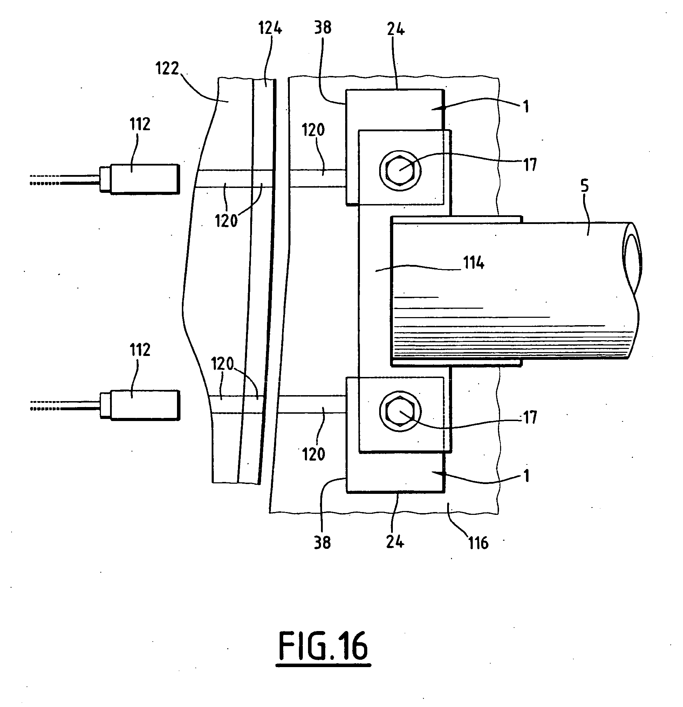

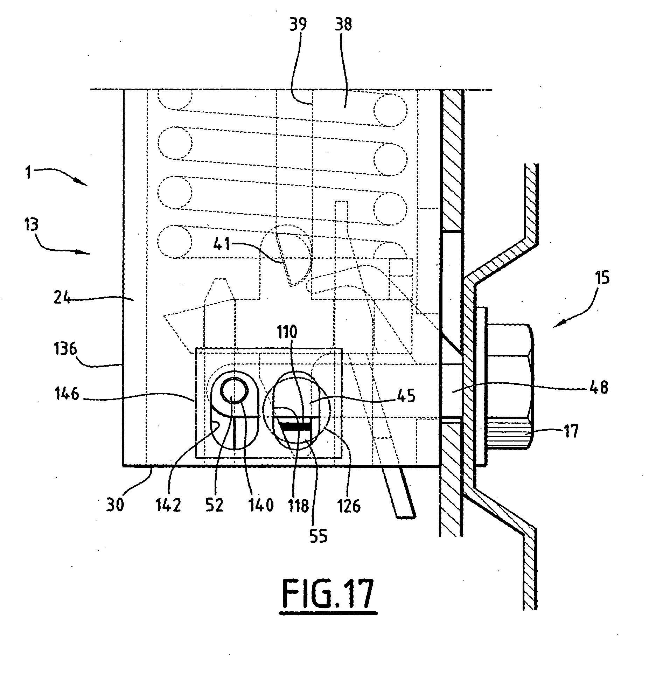

Selon un autre aspect de l'invention, illustré notamment sur les figures 16 à 18, l'organe de blocage 19 porte un repère 110 (figure 17) apte à coopérer avec un capteur 112 (figure 16) en vue de détecter que l'organe de blocage a atteint sa position active.

Ce repère 110 est typiquement une tache de couleur prédéterminée. La tache est par exemple une bande, présentant typiquement une hauteur de 1 mm et une longueur de 6 mm. La hauteur est prise ici parallèlement à l'axe de l'enveloppe externe 24 de l'organe femelle, et la longueur perpendiculairement audit axe. La tache pourrait par exemple avoir la forme d'un carré, d'un rectangle, d'un point, d'un disque, ou toute autre forme permettant sa détection par le capteur. Cette bande est par exemple de couleur blanche mais pourrait être d'une autre couleur. La tache 110 est typiquement, mais pas toujours, disposée sur la tranche du pêne 55, c'est-à-dire sur une face du pêne 55 tournée vers une des parois 38 de l'enveloppe externe de l'organe femelle.

La tache 110 est prévue pour coopérer avec un capteur optique de type RVB (Rouge, Vert, Bleu). De tels capteurs sont connus, et sont susceptibles d'être programmés pour la détection d'une couleur prédéterminée, en l'occurrence ici la couleur de la tache 110, par exemple le blanc.

Il serait possible d'utiliser d'autres types de capteur, par exemple des caméras couplées à des moyens numériques de reconnaissance de formes et/ou de couleurs, ou des cellules photoélectriques coopérant avec des taches réfléchissantes portées par l'organe de blocage.

Comme expliqué ci-dessus, la traverse 5 est généralement fixée en trois points sur la caisse. Elle est fixée à la caisse à ses deux extrémités opposées par l'intermédiaire d'étriers 114 visibles sur la figure 1, et également par la liaison T.I.B. 9. On a décrit plus haut que le dispositif de fixation 1 permettant de fixer la liaison T.I.B. 9 à la traverse inférieure de baie était orienté de telle façon que l'axe de l'enveloppe de l'organe femelle 13 de ce dispositif était transversal.

Comme le montre la figure 16, chaque étrier 114 est rigidement fixé sur une équerre 116 solidaire de la caisse du véhicule à l'aide de deux dispositifs de fixation 1 du type décrit ci-dessus. Chacun des deux dispositifs est orienté de telle sorte que l'axe de l'enveloppe de l'organe femelle est orienté verticalement. La paroi 27 de cet organe femelle est tournée vers l'arrière, les parois 38 étant tournées l'une vers la droite et l'autre vers la gauche du véhicule. En variante, chaque étrier 114 peut être fixé par un unique dispositif de fixation 1 ou par plus de deux dispositifs de fixation.

On va maintenant décrire plus spécifiquement la disposition des organes de fixation 1 de l'étrier gauche 114.

L'organe femelle 13 de chacun de ces dispositifs de fixation comporte une fenêtre 118 (figure 17) découpée dans la paroi 38 tournée vers la gauche du véhicule. Cette fenêtre est ménagée entre l'extrémité fermée 41 de la rainure portée par la paroi 38, et l'extrémité 30 de l'enveloppe de l'organe femelle. La fenêtre 118 est disposée dans le prolongement de la rainure 39. Elle présente par exemple axialement une hauteur d'environ 12 mm et présente par exemple une largeur d'environ 6 mm.

La tache de couleur 110 est ménagée sur la tranche du pêne 55 tournée vers la paroi 38 dans laquelle la fenêtre 118 est découpée. En position active de l'organe de blocage 19, la tache de couleur 110 se trouve sous la boucle 45 de l'organe mâle, sensiblement à mi-hauteur de la fenêtre 118.

Les capteurs 112 permettant de détecter l'apparition du repère 110 dans la fenêtre 118 sont typiquement fixés sur le préhenseur de manipulation (non représenté) qui déplace la planche de bord en vue de sa mise en place dans l'habitacle du véhicule automobile. C'est ce manipulateur qui approche la planche de bord de la caisse 7 de façon à faire pénétrer l'organe mâle des dispositifs de fixation 1 dans les organes femelles correspondants. En variante, les capteurs peuvent être montés directement sur la caisse 7.

Les détecteurs 112 associés aux dispositifs de fixation 1 de l'étrier gauche 114, sont disposés à l'extérieur du véhicule, à gauche de celui-ci (figure 16). Chaque détecteur 112 est placé de telle sorte que son champ de détection soit tourné vers la droite, c'est-à-dire vers l'organe femelle du dispositif de fixation qui lui est associé. Des trous rectangulaires 120 sont ménagés dans le côté de caisse 122, dans la doublure du côté de caisse 124 et dans l'équerre de fixation 116, au droit des capteurs. Ces trous 120 sont dans le prolongement les uns des autres. Ils présentent par exemple une hauteur de 22 mm et une largeur de 11 mm. La fenêtre 118 est placée dans le prolongement des trous 120, de telle sorte que le champ de détection du capteur 112 s'étend depuis le capteur 112 à travers les trous 120 jusqu'à la fenêtre 118. Ce champ de détection 126, comme le montre la figure 17, est, au niveau de la fenêtre 118, un cercle d'un diamètre de 8 mm environ dont le centre est sensiblement superposé au centre de la fenêtre 118.

La forme et la taille des trous 120, de la fenêtre et du champ de détection 126 peuvent varier en fonction de l'environnement du véhicule et de la taille des dispositifs de fixation 1.

Quand la planche de bord occupe sa position normale par rapport à la caisse, c'est-à-dire quand elle est montée sans jeu par rapport à la caisse, la bande 110 apparaît dans une position nominale au centre de la fenêtre 118 et au centre du champ de détection 126 quand l'organe de blocage 119 est en position active. Toutefois, le champ de détection 126 du capteur couvre une zone autour de cette position nominale de la bande fonction des tolérances de montage de la planche de bord sur le châssis. Ainsi, si la planche de bord est montée sur le châssis avec un décalage en X, Y ou Z restant dans les tolérances indiquées plus haut, la bande 110 reste dans la fenêtre 118 et dans le champ de détection 126 du capteur.

Les dispositifs de fixation 1 prévus pour fixer l'étrier droit 114 sont similaires aux dispositifs de fixation de l'étrier gauche, à la différence près que les fenêtres 118 sont percées dans les parois 38 de l'organe femelle tournées vers la droite du véhicule.

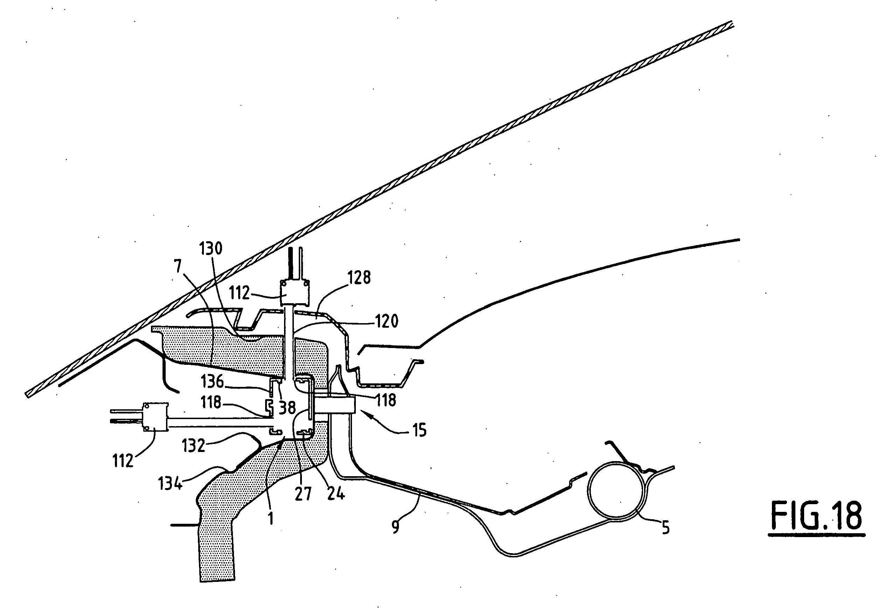

Comme le montre la figure 18, le capteur 112 permettant de contrôler le dispositif de fixation 1 de la liaison T.I.B. peut être disposé soit au-dessus de la planche de bord, soit dans le compartiment moteur, à l'avant de la planche de bord.

Dans le premier cas, le dispositif de fixation 1 est orienté de telle sorte que la paroi 38 de l'organe femelle dans laquelle est ménagée la fenêtre 118 est tournée vers le haut. Des trous rectangulaires 120 sont dans ce cas ménagés successivement dans le renfort de planche de bord 128, dans la couche insonorisante 130, dans la caisse 7, et, éventuellement, dans la patte de liaison T.I.B. 9 elle-même. Ces trous 120 ont la même forme et les mêmes dimensions que précédemment.

Dans le deuxième cas, on utilise pour réaliser le contrôle l'ouverture 132 de montage de l'organe femelle 13 sur la caisse 7. Cette ouverture est ménagée dans le caisson d'auvent 134 qui ferme partiellement le compartiment moteur vers l'arrière. Elle présente une forme rectangulaire de 80 mm par 110 mm environ. Cette ouverture est découpée dans le caisson d'auvent de façon à permettre la mise en place de l'organe femelle 13 sur la caisse 7 avant montage de la planche de bord. Dans ce cas, il n'est pas nécessaire de percer des trous 120 en vue de permettre au champ de détection du capteur d'atteindre l'organe femelle 13, le champ de détection traversant l'ouverture 132.

Dans ce cas, la fenêtre 118 n'est pas ménagée sur une des parois 38 de l'enveloppe externe de l'enveloppe femelle, mais sur la paroi 136 de cette enveloppe opposée à la paroi 27 d'introduction de l'organe mâle. En conséquence, la bande de couleur n'est pas disposée sur la tranche du pêne 55 mais plutôt sur la face 99 tournée vers la paroi 136.

Le procédé de contrôle du blocage de l'organe mâle dans l'organe femelle de chacun des dispositifs de fixation de la planche de bord sur la caisse va maintenant être décrit.

Ce procédé comprend les étapes suivantes :
- disposer, pour chaque dispositif de fixation 1, un capteur 112 dans une position telle, par rapport à la caisse 7, que ledit capteur 112 présente un champ de détection 126 couvrant la position nominale occupée par le repère 110 de l'organe de blocage du dispositif de fixation ;
- fixer la planche de bord 3 sur la caisse 7 en engageant les organes mâles 15 des différents dispositifs de fixation dans les organes femelles 13 correspondants ;
- détecter l'apparition des repères 110 dans les champs de détection 126 des différents capteurs 112.

Les deux premières étapes sont généralement réalisées de manière concomitante, du fait que les capteurs, ou au moins certains d'entre eux, sont montés sur le préhenseur de manipulation de la planche de bord.

Selon un autre aspect de l'invention, le dispositif de fixation comporte un organe mâle 15 dont la boucle 45 présente un bord 52 destiné à coopérer avec l'organe de blocage 19 qui est amovible de la boucle.

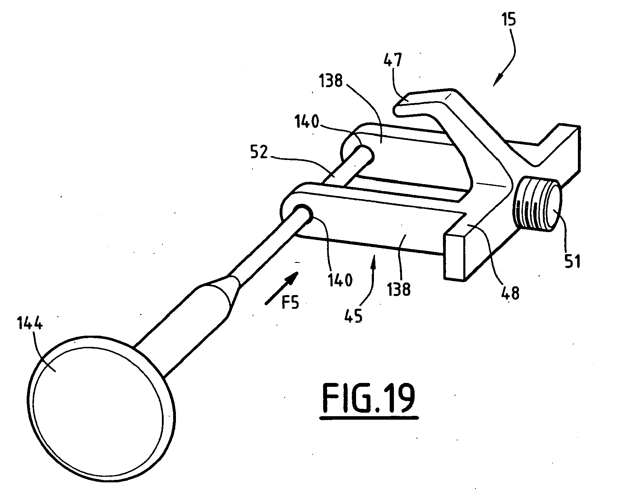

Comme le montre la figure 19, la boucle 45 comporte, outre le bord 52, un bord 48 portant le doigt 47, parallèle et opposé au bord 52, et deux bords 138 reliant les bords 48 et 52. Chaque bord 138 comporte à son extrémité opposée au bord 48 un trou traversant 140. Les trous traversants 140 des deux bords 138 sont alignés l'un avec l'autre. Le bord 52 est un axe rectiligne, par exemple de section ronde, carrée ou rectangulaire, qui est engagé serré par ses deux parties d'extrémité dans les deux trous traversants 140.

L'axe 52 peut être séparé de la boucle par expulsion hors des deux trous traversants 140. Pour cela, comme le montre la figure 19, on appuie sur une extrémité de l'axe 52, avec un outil pointu 114 du type tournevis ou éjecteur chasse-goupille. L'effort est appliqué par l'outil sur l'axe 52 suivant la direction de la flèche F5 de la figure 19, c'est-à-dire parallèlement à l'axe 52. Quand l'effort est suffisant, l'axe 52 est poussé et se dégage d'abord d'un premier des deux orifices 140, puis, après avoir traversé entièrement, c'est-à-dire sur toute sa longueur, le second des deux trous 140, est complètement séparé de la boucle 45.

L'utilisation de dispositifs de fixation dont les organes mâles présentent des bords 52 amovibles permet, en fin de vie du véhicule, de séparer la planche de bord de la caisse.

On utilise à cette fin les orifices 120 décrits plus haut relativement aux moyens de détection du blocage de l'organe mâle dans l'organe femelle.

Comme le montre la figure 17, chaque dispositif de détection comporte une fenêtre 142 ménagée dans la paroi 38 de l'organe femelle qui porte déjà la fenêtre 118. La fenêtre 142 est disposée immédiatement à côté de la fenêtre 118, légèrement décalée vers la paroi 136. Quand l'organe mâle est entièrement engagé dans l'organe femelle, la fenêtre 142 est disposée dans le prolongement de l'axe 52. Elle se superpose alors au-dessus de l'un des trous traversants 140. Pour séparer l'axe 52 de la boucle 45, on utilise les trous 120.

Comme le montre la figure 17, la taille des trous 120 est telle que la fenêtre 142 est disposée dans le prolongement de ces trous 120. On a représenté sur la figure 17 l'empreinte 146 correspondant à la projection de la section du trou 120 sur la paroi 38. Cette empreinte entoure entièrement les fenêtres 118 et 142, montrant bien que celles-ci se trouvent toutes les deux dans le prolongement des trous 120.

Ainsi, pour libérer complètement la planche de bord de la caisse, il suffit de séparer le bord 52 de la boucle correspondante de chacun des dispositifs de fixation de la planche de bord. Ceci est effectué en introduisant un outil 144 à travers les trous 120 correspondants et d'appuyer sur l'extrémité de l'axe 52 jusqu'à ce que celui-ci soit expulsé des trous traversants 140. On peut ensuite retirer la planche de bord par un mouvement longitudinal vers l'arrière par rapport à la caisse, les organes mâles n'étant plus retenus à l'intérieur des organes femelles.

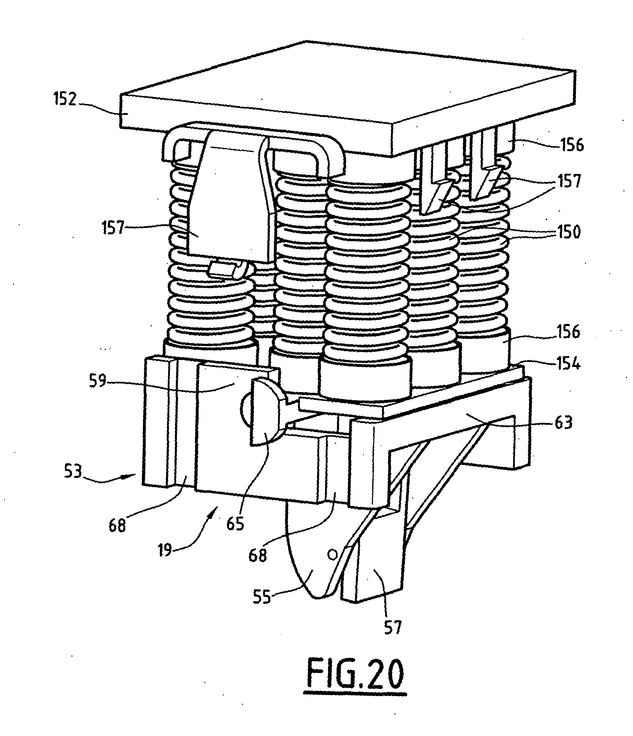

Selon encore un autre aspect de l'invention, illustré sur la figure 20, le ressort unique en spirale, représenté par exemple sur la figure 2 peut être remplacé par une multitude de ressorts en spirale de plus petit diamètre 150, disposés parallèlement les uns aux autres.

L'organe élastique 22 comprend dans ce cas, outre les ressorts 150, une plaque d'appui supérieure des ressorts 152, une plaque d'appui inférieure des ressorts 154, les ressorts 150 étant maintenus en compression entre les deux plaques 152 et 154.

Comme le montre la figure 20, la plaque 152 comporte une pluralité de fûts cylindriques 156, chaque ressort 150 ayant une partie d'extrémité engagée dans un des fûts 156. La plaque inférieure 154 présente également des fûts 156, chaque ressort étant engagé par une seconde extrémité opposée à la première dans un des fûts 156 de la plaque inférieure.

Les ressorts 150 sont tous des ressorts en spirale. Ils sont répartis par paire, les ressorts d'une même paire étant disposés de manière concentrique l'un dans l'autre. Plus précisément, chaque paire comporte un ressort en spirale de plus grand diamètre, et un ressort en spirale de plus petit diamètre. Le ressort de petit diamètre est disposé coaxialement à l'intérieur du ressort de grand diamètre. Le sens d'enroulement du ressort de petit diamètre est inversé par rapport au sens d'enroulement du ressort de plus grand diamètre.

La plaque inférieure 154 est en appui sur les ponts de matière 63 et 87 de l'organe de blocage 19. La plaque supérieure 152 est rigidement fixée à l'extrémité axiale 26 de l'enveloppe de l'organe femelle. Elle est par exemple clippée sur l'enveloppe par l'intermédiaire des pattes 157.

Par rapport au ressort hélicoïdal unique décrit ci-dessus, les moyens élastiques 150, 152, 154 représentés sur la figure 1 présentent l'avantage, pour un effort de compression à fournir prédéterminé, d'être plus légers et d'offrir une course de travail plus grande. Ainsi pour un effort à fournir de 1300 Newtons, le ressort hélicoïdal unique doit avoir un poids de 162 g et offre une course de travail de 12,8 mm. Les ressorts 150 et les deux plaques 152 et 154 ont un poids total de 105 g environ et offre une course de travail d'environ 20 mm, toujours pour un effort à fournir de 1300 Newtons.

Le dispositif de fixation décrit ci-dessus présente de multiples avantages.

Du fait que l'organe de blocage se déplace par rapport à l'élément femelle de sa position d'attente à sa position active de blocage de l'élément mâle selon un mouvement comprenant au moins une translation, la cinématique du dispositif de fixation est très simple, et ce dispositif peut être réalisé avec un nombre de pièces très limité.

Le fait que l'organe de blocage soit maintenu en position d'attente par de simples crans en saillie à l'intérieur de rainures de guidage en translation dudit organe de blocage, contribue à la simplicité du dispositif.

De même, le fait que l'organe de blocage puisse être libéré par un simple basculement dans les rainures de guidage, soit de tout l'organe de blocage, soit seulement d'une partie de cet organe, provoqué par l'engagement de l'organe mâle dans l'organe femelle, contribue également à rendre le dispositif de fixation très simple.

Par ailleurs, la forme du pêne de l'organe de blocage permet de rattraper un jeu allant jusqu'à 4mm de la planche de bord par rapport à la caisse du véhicule, suivant la direction d'engagement. L'effort à développer par le ressort sollicitant l'organe de blocage contre l'élément mâle en vue de rattraper le jeu peut être réduit quand le pêne présente un profil arqué.

Les dimensions de l'ouverture 29 pratiquée dans l'élément femelle pour l'engagement de l'élément mâle sont choisies de manière à tolérer un jeu de plus ou moins 3mm dans la direction verticale et dans la direction transversale. De même, les positions et les dimensions du bras d'actionnement et du bras de libération sont choisies de telle sorte que la coopération entre les deux bras soit possible dans les limites de tolérances transversale et verticale précisées ci-dessus.

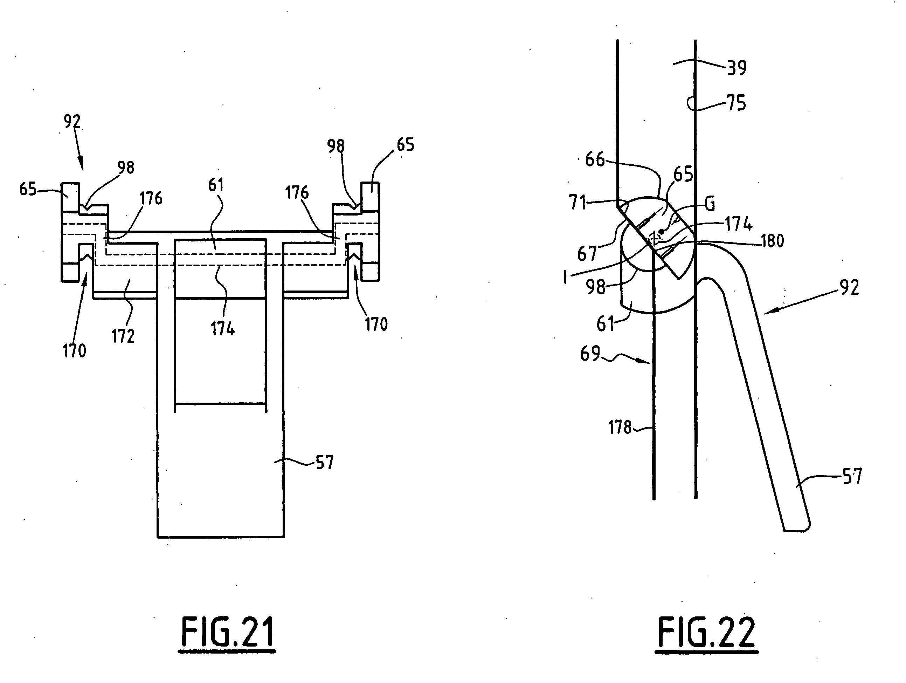

Une variante de réalisation d'un basculeur pour un organe de blocage analogue à celui des figures 9 à 11 va maintenant être décrite en référence aux figures 21 à 24. Les éléments du basculeur similaires ou ayant la même fonction seront désignés par les mêmes références numériques que sur le mode de réalisation des figures 9 à 11.

Tel que représenté sur les figures 21 et 22, le basculeur 92 comprend un bras de libération 57, une nervure 61 et deux pions en demi-lune 65, similaires à ceux du mode de réalisation des figures 9 à 11.

Les moyens de liaison pivot entre le loquet et le basculeur 92 comprennent deux parties en demi disque 98 formées sur la nervure 61 à proximité des pions 65.

Le basculeur 92 diffère de celui du mode de réalisation des figures 9 à 11 notamment en ce qu'il comprend des zones de ruptures 170 situées dans les parties en demi disque 98 entre la nervure 61 et les pions 65.

Le basculeur 92 comprend un corps en matière plastique 172 dans lequel sont formés d'une seule pièce le bras 57, la nervure 61, les parties en demi disque 98 et les pions 65. Les pions 65 comportent des méplats à leurs sommets, c'est-à-dire à l'opposé des bases 67 des pions.

Le basculeur 92 comprend un insert 174 métallique s'étendant au travers de la nervure 61 et jusque dans les pions 65.

Les portions d'extrémité de l'insert 174 s'étendent au travers des zones de rupture 170.

L'insert 174 est muni de décrochements 176 entre une portion centrale s'étendant dans la nervure 61 et des portions d'extrémité s'étendant dans les parties en demi disque 98 et dans les pions 65.

Dans les pions 65, l'insert 174 s'étend suivant un axe décalé par rapport à l'axe I des pions 65, de façon que l'insert 174 soit sensiblement tangent à la base des pions 65 (figure 22).

Au moins les portions d'extrémité de l'insert 174 possèdent une section ronde.

Les zones de ruptures 170 sont prévues sous la forme d'encoches ménagées dans le corps 172.

Les zones de rupture 170 sont prévues pour rompre lorsqu'un couple dépassant un seuil déterminé, est appliqué autour de l'axe I.

Après la rupture des zones de ruptures 170, les pions 65 restent liés au reste du basculeur 92 par l'insert 174, tout en pouvant pivoter autour des portions d'extrémité de celui-ci.

Le fonctionnement de ce basculeur 92 va maintenant être détaillé en référence aux figures 22 à 24.

Comme le montre la figure 22, en position d'attente de l'organe de blocage, les bases 67 des pions 65 portent contre les pans inclinés 71 des crans 69 de blocage. Les faces semi circulaires 66 des pions portent contre les bords 75 des rainures 39 opposées aux crans 69. On voit sur la figure 22 que les crans 69 comprennent chacun un pan 178, sensiblement parallèle au bord 75 de la nervure. Les pans 71 et 178 sont séparés par une arête 180. Le ressort 22 applique à l'organe de blocage 19 un effort parallèlement au bord 75 de la rainure, dont la résultante est appliquée au point noté G sur les figures 22 à 24. Ce point G correspond sensiblement aux centres de gravité des pions 65 sur les figures 22 à 24. De manière à assurer la stabilité de l'organe de blocage en position d'attente, le point G est situé au droit du pan incliné 71, c'est-à-dire à gauche sur la figure 22 de l'arête 180.

De ce fait, l'effort appliqué par le ressort 22 à l'organe de blocage parallèlement au bord 75 de la rainure n'entraîne pas les pions en demi-lune 65 en rotation autour de l'axe I.

De préférence, le pan incliné 71 forme par rapport au bord 75 un angle compris entre 45 et 90°. Cet angle vaut par exemple 80°. Plus l'angle sera important, plus la stabilité de l'organe de blocage 19 en position d'attente sera grande.

Quand l'organe mâle a suffisamment pénétré à l'intérieur de l'organe femelle, le bras d'actionnement de l'organe mâle vient s'appuyer sur le bras de libération 57 du basculeur 92. La sollicitation appliquée suivant la direction de l'engagement par le bras d'actionnement a pour effet de faire pivoter le bras de libération 57 autour de l'axe I. Après une course angulaire d'environ 15°, le basculeur 92 vient en butée contre le loquet 90.

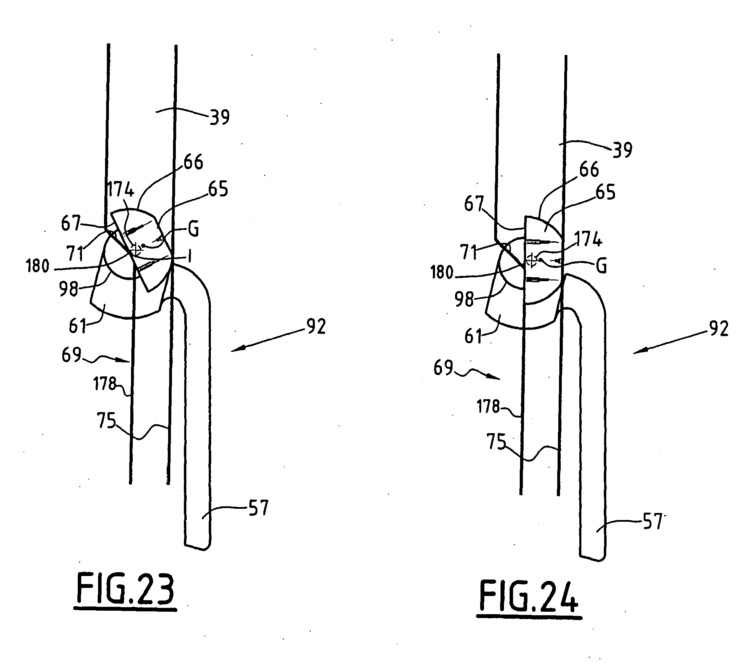

Les pions 65 sont entraînés en rotation par le bras de libération 57, et vont basculer partiellement autour de l'arrête 180. Cette situation est illustrée sur la figure 23. Dans cette situation, la zone de contact entre le cran 69 et la base 67 des pions est limitée à l'arrête 180.

Le ressort 22 exerce un effort très important sur l'organe de blocage 19, vers le bas de la figure 23. Cet effort va entraîner une déformation de l'arête 180, et un glissement de la base 67 vers le bas de la figure 23 par rapport au cran 69.

Du fait de la rotation du basculeur, le point G va passer au-delà de la zone de contact entre la base 67 et le cran 69. L'effort appliqué par le ressort hélicoïdal 22 va alors créer un couple entre les pions en demi-lune 65 et la nervure 61 du basculeur, du fait que le basculeur est en butée. Ce couple est suffisant pour rompre les zones de rupture du basculeur 92.

Du fait de la rupture des zones de ruptures 170, les pions 65 sont libres en rotation autour de l'insert 174 tout en restant liés au reste du basculeur 92, et peuvent s'orienter facilement pour pivoter dans une position leur permettant de glisser entre les crans 69 et les bords 75 comme illustré sur les figures 23 et 24.

Du fait du basculement du basculeur 92, les portions d'extrémité de l'insert 174 excentrées par rapport à l'axe I, se décalent par rapport aux crans 69 de façon à pouvoir passer entre ces derniers et les bords 75.

Dans cette variante de réalisation, du fait de la présence des zones de rupture 170, les pions 65 sont solidaires du reste du basculeur 92 pour le maintenir dans une position de blocage de l'organe de blocage en position d'attente, et se rompent pour faciliter la libération de l'organe de blocage de sa position d'attente.

L'insert 174 renforce le basculeur 92, en particulier dans les pions 65, lorsqu'ils sont en appui sur les crans 69 pour bloquer l'organe de blocage en position d'attente.

L'insert 174 assure également la liaison entre les pions 65 et le reste du basculeur 92 après la rupture des zones de ruptures 174, pour éviter que les pions 65 ne soient complètement désolidarisés du basculeur 92, et se baladent dans le véhicule automobile.

Des zones de rupture et un insert pourraient également être prévus à la variante de réalisation analogue à celle des figures 2 à 8 dans laquelle le levier et le penne sont réalisés d'une pièce.

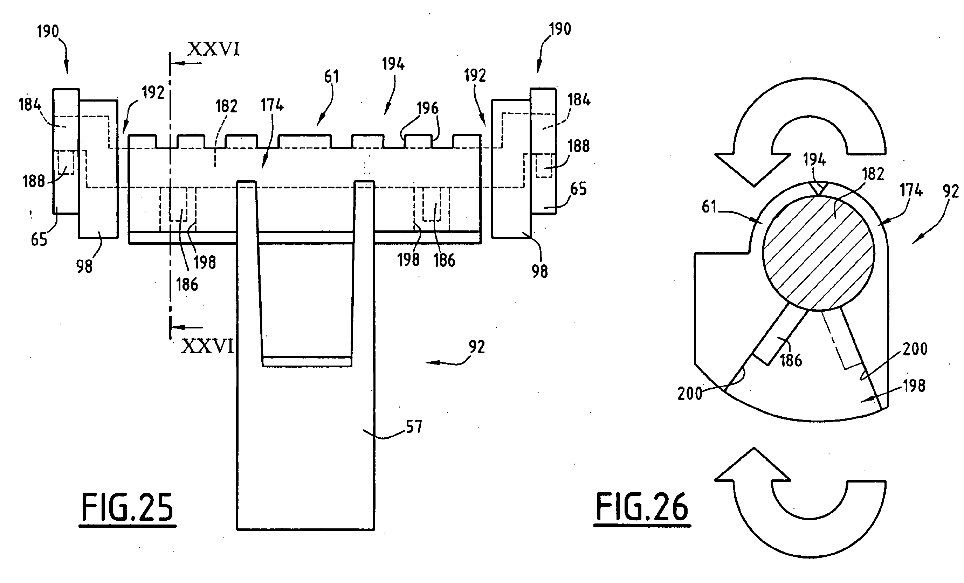

Une variante de réalisation du basculeur des figures 21 à 24 va maintenant être décrit en référence aux figures 25, 26, et 27A à 27C.

Les éléments du basculeur similaires ou ayant la même fonction seront désignés par les mêmes références numériques que sur la variante de réalisation des figures 21 à 24.

Comme précédemment, le basculeur comporte un insert métallique 174 et des parties en matière plastique surmoulées sur l'insert 174. L'insert 174 comporte une partie centrale rectiligne 182 et deux parties d'extrémité 184 décalées par rapport à la portion centrale. Les parties d'extrémité 184 sont alignées l'une avec l'autre, suivant une direction sensiblement parallèle à celle de la partie centrale 182. Les parties 182 et 184 sont de section ronde.

L'insert 174 comporte encore deux pattes 186 venues de matière avec la partie centrale 182 et deux pattes 188 venues de matière, chacune avec l'une des parties d'extrémité 184. Les pattes 186 et 188 s'étendent sensiblement radialement par rapport respectivement aux parties 182 et 184.

Deux parties 190 en matière plastique sont surmoulées sur les parties d'extrémités 184 de l'insert. Chaque partie 190 forme un pion 65 et une partie en demi disque 98 accolée au pion 65.

La nervure 61 est surmoulée sur la partie centrale 182 de l'insert, le bras 57 étant venue de moulage avec la nervure 61. La nervure 61 est complètement séparée des deux parties 190 de matière plastique surmoulée sur les extrémités 184 de l'insert. On entend par là que la nervure 61 et les parties 190 sont liées seulement par l'intermédiaire de l'insert, la matière plastique constituant la nervure 61 et celle constituant les parties 190 n'étant raccordées directement l'une à l'autre en aucun point. Il existe donc une solution de continuité 192 dans la matière plastique entre d'une part, la nervure 61 et d'autre part, les parties 190.

Les pattes 188 sont noyées dans la matière plastique constituant les pions 65.

La nervure 61 comporte une ligne de moindre résistance 194, s'étendant parallèlement à la partie centrale 182 de l'insert, sur toute la longueur de la nervure 61. Cette ligne 194 est réalisée par exemple en ménageant des incisions 196 dans la matière plastique, ces incisions étant écartées les unes des autres. Ces incisions ont par exemple une section en V perpendiculairement à la partie 182 de l'insert (voir figure 26).

Comme le montre la figure 26, deux logements 198 de réception des pattes 186 sont ménagés dans la nervure 61. Ces logements 98 sont situés à l'opposé de la ligne de moindre résistance 194 par rapport à l'insert 174. Chaque logement est délimité par deux parois opposées 200 disposées en V. Les parois 200 convergent vers l'axe central de la partie 182 de l'insert.

En position d'attente de l'organe de blocage, les languettes 186 sont plaquées contre la paroi 200 située à gauche de la figure 26.

Du fait de la présence des languettes 188 noyées dans la matière plastique formant les pions 65, et du fait de l'existence de la ligne de moindre résistance, la liaison entre les pions 65 et l'insert est plus résistante que la liaison entre la nervure 61 et l'insert quand un couple de rotation est exercé entre les pions 65 et la nervure 61 autour de l'insert 174.

Ainsi, quand un couple est exercé entre les pions 65 et l'insert 61, la nervure 61 va se désolidariser de l'insert 174 avant que les pions 65 ne se désolidarisent dudit insert.

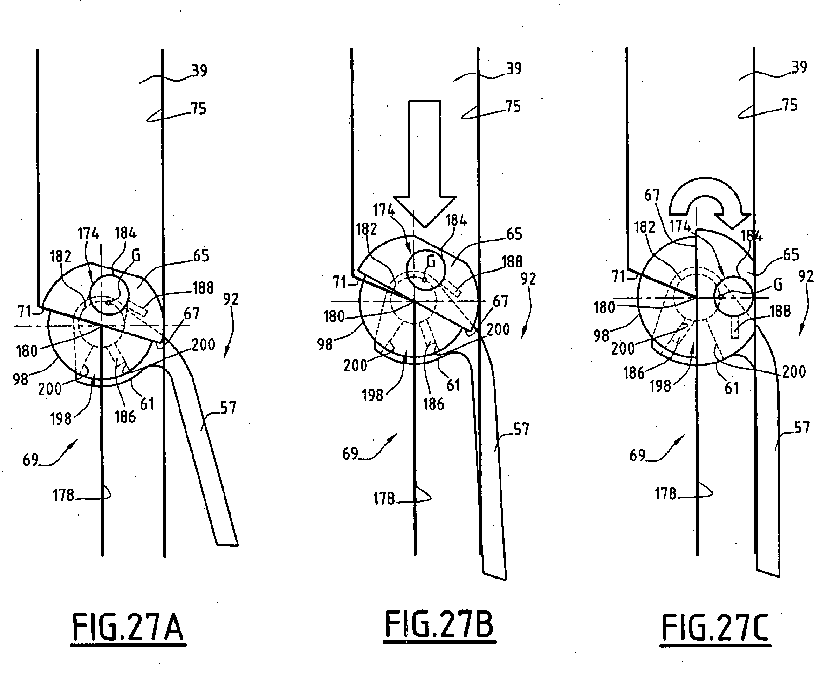

Le fonctionnement du basculeur décrit ci-dessus va maintenant être détaillé, en référence aux figures 27A à 27C.

En position d'attente de l'organe de blocage, les pions 65 reposent par leurs bases 67 sur les pans inclinés 71 des crans. Cette situation est illustrée sur la figure 27A. Comme précédemment, les pans inclinés 71 forment un angle compris entre 45 et 90° par rapport aux bords 75 des rainures. De préférence, cet angle vaut 80°. Comme précédemment, le point G d'application de la force exercée par le ressort 22, considéré sur la figure 27A, est situé au droit du pan incliné 71, à proximité de l'arête 180 du cran. Le bras de libération 57 forme un angle d'environ 15° par rapport au bord 75. Les pattes 186 de l'insert sont en appui contre les parois 200 de la nervure 61, ces parois étant orientées vers la gauche de la figure 26 et vers la droite de la figure 27A.

L'organe de blocage est maintenu en position d'attente du fait de la forte inclinaison du plan incliné 71 par rapport à la direction de déplacement de l'organe de blocage, et également du fait que le point G est situé à gauche de l'arête 180 sur la figure 27A.

Quand l'organe mâle a suffisamment pénétré à l'intérieur de l'organe femelle, le bras d'actionnement de l'organe mâle vient appuyer sur le bras de libération 57 du basculeur 92. La sollicitation appliquée suivant la direction de l'engagement par le bras d'actionnement, a pour effet de faire pivoter le bras de libération 57 autour de l'axe I. Le bras 57 entraîne en rotation la nervure 61, celle-ci entraînant à son tour les pions 65 par l'intermédiaire de l'insert 174.

Quand le bras et la nervure 61 ont effectué une rotation d'environ 15° autour de l'axe I, ils arrivent en butée contre le loquet 90. On se trouve alors dans la situation de la figure 27B.

Comme précédemment, la rotation des pions 65 d'environ 15° fait que les pions 65 ont pivoté par rapport à l'arête 180, la zone de contact entre les crans 69 et les bases 67 des pions correspondant alors essentiellement à l'arête 180. Sous l'effet de la sollicitation appliquée par le ressort 22 à l'organe de blocage, il se produit comme précédemment une déformation de cette arête 180 et un glissement des pions 65 par rapport à l'arête 180. Du fait de la rotation du basculeur, le point G passe au-delà de l'arête 180. L'effort appliqué par le ressort 22 créé un couple entre les pions 65, et l'ensemble formé par la nervure 61 et le bras 57, du fait que le basculeur est en butée.

Ce couple est suffisant pour provoquer la rupture de la nervure 61 le long de la ligne de moindre résistance 194, de telle sorte que l'insert 174 devient libre par rapport à la nervure 61.

L'ensemble formé par les deux pions 65 et l'insert 174 pivote autour de l'arête 180 sous l'effet de la sollicitation appliquée par le ressort et s'oriente de telle sorte que la base 67 des pions est parallèle aux bords 75 de la rainure. Au cours de ce mouvement, les pattes 186 se déplacent en rotation par rapport à la nervure 61, à l'intérieur des logements 198. Dans la situation de la figure 27C, les pattes 186 sont plaquées contre les parois 200 situées à gauche de la figure 27C et à droite de la figure 26.

Par rapport au mode de réalisation des figures 21 à 24, la variante des figures 25 et 26 a pour avantage d'assurer une rupture mieux contrôlée au sein du basculeur.

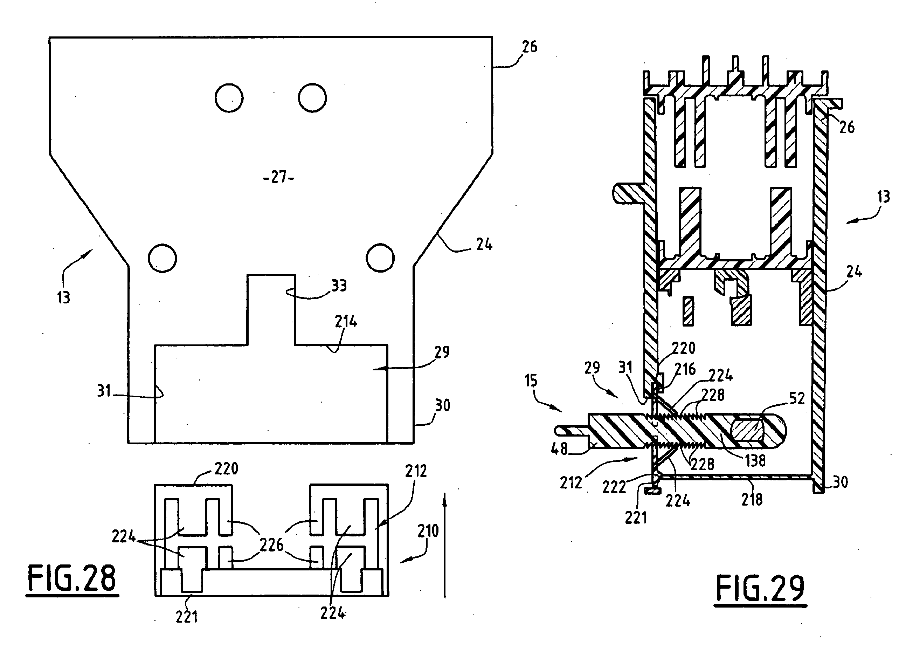

Un autre aspect de l'invention est illustré sur les figures 28 et 29.

Comme le montre la figure 28, l'organe femelle 13 peut comporter un masque 210 disposé dans l'ouverture de passage 29 de l'organe mâle, ce masque comportant des moyens anti retour 212 aptes à bloquer l'organe mâle par rapport à l'organe femelle en translation à l'opposé de la direction d'engagement, quand l'organe mâle est partiellement engagé dans l'organe femelle.

Le masque 210 présente une forme générale rectangulaire. Le masque est fixé à l'enveloppe externe 24 de l'organe femelle. A cette fin, comme le montre la figure 29, le bord 214 délimitant le tronçon 31 de l'ouverture vers la première extrémité axiale 26 de l'enveloppe forme une rainure 216. Par railleurs, l'enveloppe 24 est fermée par un fond 218 à sa seconde extrémité axiale 30.

Le masque 210 est engagé par un bord 220 dans la rainure 216, et comporte sur son bord 221 opposé au bord 220, des clips 222 aptes à venir s'encliqueter sur le fond 218.

Le masque 210 est découpé de manière à former quatre paires de pattes 224, 226. Les pattes des deux paires de pattes 224 sont relativement plus larges, les pattes des deux paires de pattes 226 sont relativement plus étroites. Les deux pattes d'une même paire s'étendent l'une à partir du bord 220 et l'autre à partir du bord 221 vers le centre du masque. Les pattes d'une même paire sont alignées, leurs extrémités libres étant séparées l'une de l'autre par un interstice.

Les pattes 224, 226 sont souples ou sont liées aux bords 220, 221 par une charnière film leur permettant de basculer par rapport à ces bords.

Comme décrit plus haut (figure 18), l'organe mâle 15 comporte une boucle 45 présentant un bord 52 destiné à coopérer avec l'organe de blocage, un bord 48 portant le doigt d'actionnement 47, parallèle et opposé au bord 52 et deux bords 138 reliant les bords 48 et 52. Comme visible sur la figure 29, les bords 138 sont crantés sur les faces destinées à être tournées vers les deux extrémités 26 et 30 de l'organe femelle. Chaque cran est délimité vers le bord 48 par une face sensiblement perpendiculaire à la direction d'engagement, et vers le bord 52 par une face inclinée par rapport à la direction d'engagement.

Ainsi, comme illustré sur la figure 29, quand l'organe mâle pénètre dans l'organe femelle à travers l'ouverture 29, l'organe mâle pousse les languettes 224, 226 vers l'intérieur de l'organe femelle, certaines des languettes glissent le long des bords 138 de la boucle, en particulier sur les portions crantées de ces bords. Du fait de l'orientation des crans 228, les languettes 224, 226 peuvent glisser tant que l'organe mâle se déplace suivant la direction d'engagement, c'est-à-dire se déplace dans le sens d'une introduction plus grande de l'organe mâle à l'intérieur de l'organe femelle. En revanche, si l'organe mâle est sollicité dans la direction inverse, c'est-à-dire dans le sens d'une sortie de l'organe mâle hors de à l'organe femelle, les extrémités libres des languettes 224, 226 viennent en prise avec les faces des crans 228 perpendiculaires à la direction d'engagement. Les languettes 224, 226 coopèrent avec les crans 228 et bloquent l'organe mâle en translation en sens inverse de la direction d'engagement.

En variante, une ou plusieurs des paires de languettes 224, 226 peuvent, avant engagement de l'organe mâle dans l'organe femelle, être réunies par un fil, par exemple un fil de matière plastique venu de matière avec les deux languettes de ladite paire.

L'existence de ces fils limite la possibilité pour des objets de pénétrer à l'intérieur de l'organe femelle de manière inintentionnelle, une telle pénétration pouvant libérer l'organe de blocage de sa position d'attente si elle conduit au pivotement du bras 57.

En revanche, les fils sont prévus suffisamment fins pour se rompre au moment de l'engagement de l'organe mâle dans l'organe femelle, et pour ne pas gêner celui-ci.

Le dispositif de fixation décrit ci-dessus peut présenter de multiples variantes.

Ainsi, l'organe mâle peut être fixés sur la caisse, et l'organe femelle peut être fixé sur la planche de bord.

L'organe de blocage ne se déplace pas en translation nécessairement perpendiculairement à la direction d'engagement de l'organe mâle, mais peut se déplacer suivant une direction légèrement inclinée par rapport à la direction d'engagement.

## Revendications

1. Dispositif de fixation d'un premier sous-ensemble structurel ou fonctionnel (7, 3) sur un second sous-ensemble structurel ou fonctionnel (3, 7) de véhicule automobile, le dispositif de fixation (1) comprenant :
- un organe femelle (13) lié au second sous ensemble (7, 3),
- un organe mâle (15) lié au premier sous-ensemble (3, 7) et susceptible de s'engager dans l'organe femelle (13) suivant une direction d'engagement,
- un organe de blocage (19), mobile par rapport à l'organe femelle (13) entre une position d'attente dans laquelle l'organe de blocage (19) autorise l'engagement de l'organe mâle (15) dans l'organe femelle (13) suivant la direction d'engagement et une position active dans laquelle l'organe de blocage (19) coopère avec l'organe mâle (15) en vue de bloquer l'organe mâle (15) par rapport à l'organe femelle (13) au moins selon la direction d'engagement,
- des moyens automatiques (21) pour déplacer l'organe de blocage (19) depuis sa position d'attente jusqu'à sa position active, activés par l'engagement de l'organe mâle (15) dans l'organe femelle (13),
l'organe de blocage (19) se déplaçant par rapport à l'organe femelle (13) de sa position d'attente à sa position active selon un mouvement comprenant au moins une translation,
les moyens automatiques de déplacement de l'organe de blocage (19) comprennant des moyens (23) pour bloquer de manière libérable l'organe de blocage (19) en position d'attente.

2. Dispositif selon la revendication 1, **caractérisé en ce que** les moyens (21) automatiques de déplacement de l'organe de blocage (19) comprennent un organe élastique (22) sollicitant l'organe de blocage (19) en translation vers sa position active.

3. Dispositif selon la revendication 1 ou 2, **caractérisé en ce que** l'organe femelle (13) comporte une cavité (35) de réception de l'organe mâle (15), l'organe de blocage (19) étant disposé à l'intérieur de la cavité (35) de l'organe femelle (13).

4. Dispositif selon l'une quelconque des revendications précédentes, **caractérisé en ce que** l'organe mâle (15) comporte une boucle (45), l'organe de blocage (19) comprenant un pêne (55) engagé dans la boucle (45) en position active et coopérant avec un bord (52) de la boucle (45) pour bloquer l'organe mâle (15) par rapport à l'organe femelle (13).

5. Dispositif selon la revendication 4, **caractérisé en ce que** le pêne (55) coopère avec le bord (52) de la boucle (45) par une surface (79) oblique par rapport à la direction de translation de l'organe de blocage (19).

6. Dispositif selon la revendication 4, **caractérisé en ce que** le pêne (55) coopère avec le bord (52) de la boucle (45) par une surface arquée (104).

7. Dispositif selon l'une quelconque des revendications précédente, **caractérisé en ce que** l'organe de blocage (19) se déplace par rapport à l'élément femelle (13) de sa position d'attente à sa position active selon un mouvement comprenant au moins une translation suivant une direction sensiblement perpendiculaire à la direction d'engagement de l'organe mâle (15).

8. Dispositif selon l'une quelconque des revendications précédente, **caractérisé en ce que** le second sous-ensemble est une caisse (7), le premier sous-ensemble étant une planche de bord (3).

9. Dispositif selon l'une quelconque des revendications précédentes, **caractérisé en ce que** l'organe de blocage (19) porte un repère (110) apte à coopérer avec un capteur (112) en vue de détecter que l'organe de blocage (19) a atteint sa position active.

10. Dispositif selon la revendication 9, **caractérisé en ce que** le repère (110) est une tâche de couleur prédéterminée, apte à coopérer avec un capteur optique (120) de détection de ladite couleur prédéterminée.

11. Dispositif selon la revendication 2, **caractérisé en ce que** l'organe élastique (22) comprend une pluralité de ressorts de compression (150) montés parallèlement les uns aux autres.

12. Dispositif selon l'une quelconque des revendications précédentes, **caractérisé en ce que** l'organe femelle (13) présente une ouverture (29) de passage de l'organe mâle (15) et au moins une lamelle (224, 226) liée à un bord de l'ouverture (29) et faisant saillie dans l'ouverture (29), l'organe mâle (15) comprenant des crans (228) aptes à venir en prise avec la ou au moins une lamelle (224, 226) quand l'organe mâle (15) traverse l'ouverture (29) en vue de bloquer l'organe mâle (15) par rapport à l'organe femelle (13) en translation suivant la direction opposée à la direction d'engagement.

13. Procédé de contrôle du blocage de l'organe mâle (15) dans l'organe femelle (13) pour un dispositif de fixation (1) selon la revendication 9 ou 10, le procédé comprenant les étapes suivantes :
- disposer le capteur (112) par rapport au second sous-ensemble structurel ou fonctionnel (7, 3) de manière à ce que ledit capteur (112) présente un champ de détection couvrant une position nominale occupée par le repère (110) quand l'organe de blocage (119) occupe sa position active,
- fixer le premier sous-ensemble structurel ou fonctionnel (7, 3) au second sous-ensemble structurel ou fonctionnel (3, 7) en engageant l'organe mâle (15) dans l'organe femelle (13),
- détecter l'apparition du repère (110) dans le champ de détection du capteur (112).

14. Procédé de contrôle selon la revendication 13, **caractérisé en ce que** le champ de détection du capteur (112) couvre une zone autour de la position nominale fonction des tolérances de montage du premier sous-ensemble structurel ou fonctionnel (7, 3) sur le second sous-ensemble structurel ou fonctionnel (3, 7).

## Claims

1. Device for fixing a first structural or functional subassembly (7, 3) to a second structural or functional subassembly (3, 7) of a motor vehicle, the fixing device (1) comprising:
- a female member (13) which is connected to the second subassembly (7, 3),
- a male member (15) which is connected to the first subassembly (3, 7) and which is capable of being engaged in the female member (13) in an engagement direction,
- a blocking member (19) which is movable relative to the female member (13) between a standby position, in which the blocking member (19) allows engagement of the male member (15) in the female member (13) in the engagement direction, and an active position, in which the blocking member (19) co-operates with the male member (15) in order to block the male member (15) relative to the female member (13), at least in the engagement direction,
- automatic means (21) which are for moving the blocking member (19) from its standby position as far as its active position and which are actuated by the male member (15) becoming engaged in the female member (13),
the blocking member (19) moving relative to the female member (13) from its standby position to its active position in accordance with a movement comprising at least one translation,
the automatic means for moving the blocking member (19) comprising means (23) for releasably blocking the blocking member (19) in a standby position.

2. Device according to claim 1, **characterised in that** the automatic means (21) for moving the blocking member (19) comprise a resilient member (22) which urges the blocking member (19) in translation towards its active position.

3. Device according to claim 1 or claim 2, **characterised in that** the female member (13) comprises a recess (35) for receiving the male member (15), the blocking member (19) being arranged inside the recess (35) of the female member (13).

4. Device according to any one of the preceding claims, **characterised in that** the male member (15) comprises a loop (45), the blocking member (19) comprising a latch (55) which is engaged in the loop (45) in an active position and which co-operates with an edge (52) of the loop (45) in order to block the male member (15) relative to the female member (13).

5. Device according to claim 4, **characterised in that** the latch (55) co-operates with the edge (52) of the loop (45) by means of a surface (79) which is oblique relative to the translation direction of the blocking member (19).

6. Device according to claim 4, **characterised in that** the latch (55) co-operates with the edge (52) of the loop (45) by means of an arced surface (104).

7. Device according to any one of the preceding claims, **characterised in that** the blocking member (19) moves relative to the female member (13) from the standby position to the active position thereof in accordance with a movement comprising at least one translation in a direction substantially perpendicular relative to the engagement direction of the male member (15).

8. Device according to any one of the preceding claims, **characterised in that** the second subassembly is a box (7), the first subassembly being a dashboard (3).

9. Device according to any one of the preceding claims, **characterised in that** the blocking member (19) carries a reference (110) which is capable of co-operating with a sensor (112) in order to detect that the blocking member (19) has reached the active position thereof.

10. Device according to claim 9, **characterised in that** the reference (110) is a mark which is of a predetermined colour and which is capable of co-operating with an optical sensor (120) for detecting the predetermined colour.

11. Device according to claim 2, **characterised in that** the resilient member (22) comprises a plurality of compression springs (150) which are arranged in a mutually parallel manner.

12. Device according to any one of the preceding claims, **characterised in that** the female member (13) has a through-opening (29) for the male member (15) and at least one plate (224, 226) which is connected to an edge of the opening (29) and which protrudes into the opening (29), the male member (15) comprising notches (228) which are capable of becoming engaged with the or at least one plate (224, 226) when the male member (15) extends through the opening (29) in order to block the male member (15) relative to the female member (13) in terms of translation in the direction opposite the engagement direction.

13. Method for controlling the blocking of the male member (15) in the female member (13) for a fixing device (1) according to claim 9 or claim 10, the method comprising the following steps of:
- providing the sensor (112) relative to the second structural or functional subassembly (7, 3) in such a manner that the sensor (112) has a detection field which covers a nominal position which is occupied by the reference (110) when the blocking member (119) occupies the active position thereof,
- fixing the first structural or functional subassembly (7, 3) to the second structural or functional subassembly (3, 7), with the male member (15) being engaged in the female member (13),
- detecting the appearance of the reference (110) in the detection field of the sensor (112).

14. Control method according to claim 13, **characterised in that** the detection field of the sensor (112) covers a zone around the nominal position in accordance with the assembly tolerances of the first structural or functional subassembly (7, 3) on the second structural or functional subassembly (3, 7).

## Patentansprüche

1. Vorrichtung zur Befestigung einer ersten Bau- oder Funktionsuntergruppe (7, 3) auf einer zweiten Bau- oder Funktionsuntergruppe (3, 7) eines Fahrzeugs, wobei die Befestigungsvorrichtung (1) Folgendes aufweist:
- ein weibliches Organ (13), das mit der zweiten Untergruppe (7, 3) verbunden ist,
- ein männliches Organ (15), das mit der ersten Untergruppe (3, 7) verbunden und geeignet ist, in das weibliche Organ (13) in einer Eingreifrichtung einzugreifen,
- ein Blockierorgan (19), das in Bezug auf das weibliche Organ (13) zwischen einer Warteposition, in der das Blockierorgan (19) das Eingreifen des männlichen Organs (15) in das weibliche Organ (13) in der Eingreifrichtung gestattet, und einer aktiven Position beweglich ist, in der das Blockierorgan (19) mit dem männlichen Organ (15) im Hinblick auf das Blockieren des männlichen Organs (15) in Bezug auf das weibliche Organ (13) zumindest in der Eingreifrichtung zusammenwirkt,
- automatische Mittel (21) zum Verschieben des Blockierorgans (19) aus seiner Warteposition in seine aktive Position, die durch das Eingreifen des männlichen Organs (15) in das weibliche Organ (13) aktiviert werden,
wobei sich das Blockierorgan (19) in Bezug auf das weibliche Organ (13) aus seiner Warteposition in seine aktive Position durch eine Bewegung verschiebt, die mindestens eine Translation umfasst,
wobei die automatischen Mittel zum Verschieben des Blockierorgans (19) Mittel (23) umfassen, um das Blockierorgan (19) in der Warteposition in auslösbarer Weise zu blockieren.

2. Vorrichtung nach Anspruch 1, **dadurch gekennzeichnet, dass** die automatischen Mittel (21) zum Verschieben des Blockierorgans (19) ein elastisches Organ (22) aufweisen, das das Blockierorgan (19) in der Translation in Richtung seiner aktiven Position beaufschlagt.

3. Vorrichtung nach Anspruch 1 oder 2, **dadurch gekennzeichnet, dass** das weibliche Organ (13) einen Hohlraum (35) für die Aufnahme des männlichen Organs (15) aufweist, wobei das Blockierorgan (19) im Inneren des Hohlraums (35) des weiblichen Organs (13) angeordnet ist.

4. Vorrichtung nach einem der vorhergehenden Ansprüche, **dadurch gekennzeichnet, dass** das männliche Organ (15) einen Bügel (45) aufweist, das Blockierorgan (19) einen Riegel (55) aufweist, der in aktiver Position mit dem Bügel (45) in Eingriff ist und mit einer Kante (52) des Bügels (45) zusammenwirkt, um das männliche Organ (15) in Bezug auf das weibliche Organ (13) zu blockieren.

5. Vorrichtung nach Anspruch 4, **dadurch gekennzeichnet, dass** der Riegel (55) mit der Kante (52) des Bügels (45) über eine in Bezug auf die Translationsrichtung des Blockierorgans (19) schräge Fläche (79) zusammenwirkt.

6. Vorrichtung nach Anspruch 4, **dadurch gekennzeichnet, dass** der Riegel (55) mit der Kante (52) des Bügels (45) über eine bogenförmige Fläche (104) zusammenwirkt.

7. Vorrichtung nach einem der vorhergehenden Ansprüche, **dadurch gekennzeichnet, dass** das Blockierorgan (19) sich in Bezug auf das weibliche Element (13) aus seiner Warteposition in seine aktive Position durch eine Bewegung verschiebt, die mindestens eine Translation in einer zur Eingreifrichtung des männlichen Organs (15) im Wesentlichen senkrechten Richtung umfasst.

8. Vorrichtung nach einem der vorhergehenden Ansprüche, **dadurch gekennzeichnet, dass** die zweite Untergruppe ein Gehäuse (7) ist und die erste Untergruppe ein Instrumentenbrett (3) ist.

9. Vorrichtung nach einem der vorhergehenden Ansprüche, **dadurch gekennzeichnet, dass** das Blockierorgan (19) eine Markierung (110) trägt, die fähig ist, mit einem Sensor (112) zusammenzuwirken, um zu erfassen, ob das Blockierorgan (19) seine aktive Position erreicht hat.

10. Vorrichtung nach Anspruch 9, **dadurch gekennzeichnet, dass** die Markierung (110) ein Fleck mit einer vorbestimmten Farbe ist, der fähig ist, mit einem optischen Sensor (120) zum Erfassen der vorbestimmten Farbe zusammenzuwirken.

11. Vorrichtung nach Anspruch 2, **dadurch gekennzeichnet, dass** das elastische Organ (22) eine Vielzahl von Druckfedern (150) umfasst, die zueinander parallel angebracht sind.

12. Vorrichtung nach einem der vorhergehenden Ansprüche, **dadurch gekennzeichnet, dass** das weibliche Organ (13) eine Öffnung (19) zum Hindurchführen des männlichen Organs (15) und mindestens eine Lamelle (224, 226) aufweist, die mit einer Kante der Öffnung (29) verbunden ist und in die Öffnung (29) vorspringt, wobei das männliche Organ (15) Rasten (228) umfasst, die fähig sind, mit der oder mit mindestens einer Lamelle (224, 226) in Eingriff zu kommen, wenn das männliche Organ (15) die Öffnung (29) durchquert, um das männliche Organ (15) in Bezug auf das weibliche Organ (13) in der Translation in der der Eingreifrichtung entgegengesetzten Richtung zu blockieren.

13. Verfahren zum Kontrollieren der Blockierung des männlichen Organs (15) im weiblichen Organ (13) für eine Befestigungsvorrichtung (1) nach Anspruch 9 oder 10, welches Verfahren die folgenden Schritte aufweist:
- Anordnen des Sensors (112) in Bezug auf die zweite Bau- oder Funktionsuntergruppe (7, 3) in einer Weise, dass der Sensor (112) ein Erfassungsfeld aufweist, das eine Nennposition abdeckt, die von der Markierung (110) eingenommen wird, wenn das Blockierorgan (19) seine aktive Position einnimmt,
- Befestigen der ersten Bau- oder Funktionsuntergruppe (7, 3) an der zweiten Bau- oder Funktionsuntergruppe (3, 7), indem das männliche Organ (15) in dem weiblichen Organ (13) in Eingriff gebracht wird,
- Erfassen des Erscheinens der Markierung (110) im Erfassungsfeld des Sensors (112).

14. Kontrollverfahren nach Anspruch 13, **dadurch gekennzeichnet, dass** das Erfassungsfeld des Sensors (112) eine Zone um die Nennposition abdeckt, die von den Montagetoleranzen der ersten Bau- oder Funktionsuntergruppe (7, 3) auf der zweiten Bau- oder Funktionsuntergruppe (3, 7) abhängt.
